Europäisches Patentamt

European Patent Office

Office européen des brevets

(19)

(11)  EP 0 954 460 B1

(12)  **EUROPÄISCHE PATENTSCHRIFT**

(45) Veröffentlichungstag und Bekanntmachung des
Hinweises auf die Patenterteilung:
**08.10.2003   Patentblatt 2003/41**

(51) Int Cl.⁷: **B60R 16/02**

(21) Anmeldenummer: **98942467.6**

(22) Anmeldetag: **01.07.1998**

(86) Internationale Anmeldenummer:
**PCT/DE98/01805**

(87) Internationale Veröffentlichungsnummer:
**WO 99/026811 (03.06.1999 Gazette 1999/22)**

(54) **VERFAHREN UND VORRICHTUNG ZUR ERKENNUNG EINER KIPPTENDENZ EINES FAHRZEUGES**

METHOD AND DEVICE FOR DETECTING MOTOR VEHICLE TILT

PROCEDE ET DISPOSITIF POUR DETECTER LA TENDANCE AU BASCULEMENT D'UN VEHICULE

(84) Benannte Vertragsstaaten:
**DE FR GB SE**

(30) Priorität: **22.11.1997  DE 19751867**

(43) Veröffentlichungstag der Anmeldung:
**10.11.1999   Patentblatt 1999/45**

(73) Patentinhaber: **ROBERT BOSCH GMBH**
**70442 Stuttgart (DE)**

(72) Erfinder:
• LEIMBACH, Klaus-Dieter
  D-71696 Möglingen (DE)
• WETZEL, Gabriel
  D-70569 Stuttgart (DE)

(56) Entgegenhaltungen:
| | |
|---|---|
| EP-A- 0 330 149 | DE-A- 4 228 893 |
| FR-A- 2 425 342 | GB-A- 2 257 403 |
| US-A- 4 023 864 | US-A- 5 446 658 |

**Beschreibung**

Stand der Technik

Die Erfindung betrifft ein Verfahren und eine Vorrichtung zur Erkennung einer Kipptendenz eines Fahrzeuges gemäß dem Oberbegriff des Anspruchs 1 bzw. 9.

Verfahren und Vorrichtungen zur Erkennung einer Kipptendenz eines Fahrzeuges sind aus dem Stand der Technik in vielerlei Modifikationen bekannt.

Aus der DE 44 16 991 A1 ist ein gattungsgemäßes Verfahren und eine gattungsgemäße Einrichtung zum Warnen des Fahrers eines Lastkraftwagens vor Kippgefahr bei Kurvenfahrten bekannt. Hierzu wird vor dem Einfahren des Fahrzeuges in eine Kurve der Fahrzeugtyp und die für die Kippgefahr relevanten Zustandsdaten erfaßt und in Abhängigkeit vom Fahrzeugschwerpunkt und Kurvenradius das Kipprisiko bzw. die für letzteres maßgebliche Grenzgeschwindigkeit ermittelt. Es wird ein zur Geschwindigkeitsreduzierung aufforderndes Signal ausgelöst, wenn die aktuelle Fahrgeschwindigkeit des Fahrzeuges Kipprisiko begründet oder ein vorbestimmter Sicherheitsabstand zur Kippgefahr unterschritten wird. Die Fahrgeschwindigkeit des Fahrzeuges, bei der mit Sicherheit keine Kippgefahr besteht, wird ausgehend von einer Kippgleichung ermittelt. In die Kippgleichung gehen u. a. die Fahrzeuggeschwindigkeit, der vom Fahrzeug durchfahrene Kurvenradius, die Höhe des Schwerpunktes des Fahrzeuges über der Fahrbahn, sowie das Ungleichgewicht der Radlasten ein. Die Radlasten werden mit Hilfe von in die Fahrbahn eingelassenen Radlastsensoren ermittelt. Unterschreitet die Fahrgeschwindigkeit des Fahrzeuges einen vorbestimmten Sicherheitsabstand zu der an der Grenze der Kippgefahr liegenden Fahrgeschwindigkeit, so wird ein Signal erzeugt, mit dem der Fahrer des Fahrzeuges vor überhöhter Geschwindigkeit beim Befahren der Kurve gewarnt wird. Das die überhöhte Fahrgeschwindigkeit anzeigende Signal wird solange ausgelöst, bis die jeweils gemessene Fahrgeschwindigkeit auf ein jegliches Kipprisiko ausschließendes Maß reduziert ist. Ferner zeigt die DE 44 16 991 A1, daß der Schlupf der Räder des jeweiligen Fahrzeuges auf der Fahrbahn ermittelt und bei der Beurteilung der Kippgefahr berücksichtigt werden kann.

Die Aufgabe der vorliegenden Erfindung besteht darin, das Verfahren zur Erkennung einer Kipptendenz eines Fahrzeuges zu verbessern.

Diese Aufgabe wird durch die Merkmale des Anspruchs 1 und durch die des Anspruchs 9 gelöst.

Vorteile der Erfindung

Mit dem Verfahren wird eine Kipptendenz eines Fahrzeuges um eine in Längsrichtung des Fahrzeuges orientierte Fahrzeugachse erkannt. Hierzu wird für wenigstens ein Rad eine die Raddrehzahl beschreibende Größe ermittelt. Ferner wird wenigstens eine die Querdynamik des Fahrzeuges repräsentierende Größe ermittelt. Für wenigstens ein Rad wird wenigstens in Abhängigkeit der die Raddrehzahl des entsprechenden Rades beschreibenden Größe und einer der die Querdynamik des Fahrzeuges repräsentierenden Größe eine das Radverhalten quantitativ beschreibende Größe ermittelt. Wenigstens in Abhängigkeit von der für wenigstens ein Rad ermittelten Größe, die das Radverhalten dieses Rades quantitativ beschreibt, wird ermittelt, ob für das Fahrzeug eine Kipptendenz um eine in Längsrichtung des Fahrzeuges orientierte Fahrzeugachse vorliegt.

An dieser Stelle sei bemerkt, wenn nachfolgend der Begriff "Kipptendenz des Fahrzeuges" verwendet wird, so sei die "Kipptendenz des Fahrzeuges um eine in Längsrichtung des Fahrzeuges orientierte Fahrzeugachse" gemeint. Die Formulierung "eine in Längsrichtung des Fahrzeuges orientierte Fahrzeugachse" ist folgendermaßen zu verstehen: Zum einen kann es sich bei der Fahrzeugachse, um die eine Kipptendenz des Fahrzeuges auftritt, um die eigentliche Fahrzeuglängsachse handeln. Zum anderen kann es sich um eine Fahrzeugachse handeln, die um einen gewissen Winkel gegenüber der eigentlichen Fahrzeuglängsachse verdreht ist. Dabei ist es unerheblich, ob die verdrehte Fahrzeugachse durch den Schwerpunkt des Fahrzeuges geht oder nicht. Der Fall der verdrehten Fahrzeugachse soll auch solch eine Orientierung der Fahrzeugachse zulassen, bei der die Fahrzeugachse entweder einer Diagonalachse des Fahrzeuges oder einer zu dieser parallelen Achse entspricht.

Die Ermittlung einer das Radverhalten quantitativ beschreibenden Größe, in deren Abhängigkeit ermittelt wird, ob für das Fahrzeug eine Kipptendenz vorliegt, begründet gegenüber dem Stand der Technik folgenden Vorteil: Da sich eine Kipptendenz eines Fahrzeuges um eine in Längsrichtung des Fahrzeuges orientierte Fahrzeugachse unmittelbar im Radverhalten der Räder des Fahrzeuges wiederfindet, ist mit dem erfindungsgemäßen Verfahren, aufgrund der Auswertung einer das Radverhalten quantitativ beschreibenden Größe, eine Ermittlung, ob für das Fahrzeug eine Kipptendenz vorliegt, schnell und präzise möglich. Schnell deshalb, weil in die Ermittlung der Kipptendenz unmittelbar eine das Radverhalten des Rades quantitativ beschreibende Größe eingeht. Präzise deshalb, weil zur Ermittlung der Kipptendenz mehrere Räder ausgewertet werden können, und weil die das Radverhalten beschreibenden Größen quantitativ vorliegen, und somit beispielsweise genau gestufte Plausibilitätsabfragen möglich sind.

Vorteilhafterweise wird das Verfahren zur Erkennung einer Kipptendenz des Fahrzeuges im Rahmen eines Verfahrens zur Stabilisierung des Fahrzeuges eingesetzt. Vorteilhafterweise kann es sich bei einem solchen Verfahren zur Stabilisierung um ein Verfahren zur Umkippvermeidung des Fahrzeuges handeln.

Bei Vorliegen einer Kipptendenz des Fahrzeuges werden zur Stabilisierung des Fahrzeuges, insbesondere zur Vermeidung des Umkippens des Fahrzeuges vorteilhafterweise wenigstens Bremseneingriffe an wenigstens einem Rad und/oder Motoreingriffe und/oder Eingriffe an Fahrwerksaktuatoren durchgeführt.

Von Vorteil hat sich erwiesen, daß der Betrag einer der die Querdynamik des Fahrzeuges repräsentierenden Größen, insbesondere der einer die Querbeschleunigung und/oder der einer die Gierrate des Fahrzeuges beschreibenden Größe, mit einem Schwellenwert verglichen wird. Die Erkennung, ob eine Kipptendenz des Fahrzeuges vorliegt, wird dann ausgeführt, wenn der Betrag der einen die Querdynamik des Fahrzeuges repräsentierenden Größe größer als der Schwellenwert ist. Dadurch wird das erfindungsgemäße Verfahren lediglich in solchen querdynamischen Fahrzeugsituationen aktiviert, in denen mit einer Kipptendenz des Fahrzeuges zu rechnen ist.

Von weiterem Vorteil ist, wenn für wenigstens ein Rad der an diesem Rad vorherrschende Antriebs- und/oder Bremsschlupf ermittelt und dessen Betrag mit einem entsprechenden Schwellenwert verglichen wird, und wenn die Erkennung, ob eine Kipptendenz des Fahrzeuges vorliegt, in Abhängigkeit dieses Vergleiches durchgeführt wird. Basierend auf diesem Vergleich können unterschiedliche Erkennungen der Kipptendenz des Fahrzeuges durchgeführt werden. So wird, wenn für wenigstens ein Rad der Betrag des an diesem Rad vorherrschenden Antriebs- und/oder Bremsschlupfes kleiner als der entsprechende Schwellenwert ist, die Erkennung, ob eine Kipptendenz des Fahrzeuges vorliegt, wenigstens in Abhängigkeit von der für wenigstens ein Rad im aktuellen Zeitschritt ermittelten Größe, die das Radverhalten quantitativ beschreibt, durchgeführt. Wenn dagegen der Betrag des für wenigstens ein Rad ermittelten Antriebs- und/oder Bremsschlupfes größer als, der entsprechende Schwellenwert ist, so wird die Erkennung, ob eine Kipptendenz des Fahrzeuges vorliegt, wenigstens in Abhängigkeit von der für wenigstens ein Rad in einem vorigen Zeitschritt ermittelten Größe, die das Radverhalten quantitativ beschreibt, durchgeführt.

Als die Größe, die das Radverhalten des jeweiligen Rades quantitativ beschreibt, wird vorteilhafterweise eine von der auf das jeweilige Rad wirkenden Radlast abhängige Größe ermittelt. Hierbei sind Größen besonders vorteilhaft, die den Durchmesser oder den Radius des jeweiligen Rades beschreiben, da sich eine kurvenbedingte Verlagerung des Fahrzeugschwerpunktes beispielsweise deutlich auf den Durchmesser der Fahrzeugräder auswirkt, und somit eine Kipptendenz des Fahrzeuges unmittelbar anhand des Durchmessers der Fahrzeugräder erkennbar ist.

Vorteilhafterweise wird die das Radverhalten des Rades quantitativ beschreibende Größe wenigstens in Abhängigkeit der die Raddrehzahl des entsprechenden Rades beschreibenden Größe, einer die Fahrzeuggeschwindigkeit beschreibenden Größe, einer der die Querdynamik des Fahrzeuges repräsentierenden Größen und einer Geometrie des Fahrzeuges beschreibenden Größe ermittelt. Die die Fahrzeuggeschwindigkeit beschreibende Größe wird wenigstens in Abhängigkeit von den für die Räder ermittelten Größen, die die Raddrehzahlen beschreiben, ermittelt. Als eine die Querdynamik des Fahrzeuges repräsentierende Größe wird vorteilhafterweise eine die Gierrate des Fahrzeuges und/oder eine die Querbeschleunigung des Fahrzeuges beschreibende Größe ermittelt.

Zur Erkennung, ob für das Fahrzeug eine Kipptendenz um eine in Längsrichtung des Fahrzeuges orientierte Fahrzeugachse vorliegt, haben sich folgende Kriterien als vorteilhaft erwiesen. Für das Fahrzeug liegt eine Kipptendenz dann vor:

- Wenn für wenigstens ein Rad der Wert der Größe, die das Radverhalten quantitativ beschreibt, größer als ein erster Schwellenwert ist. Oder wenn für wenigstens ein Rad der Wert der Größe, die das Radverhalten quantitativ beschreibt, kleiner als ein zweiter Schwellenwert ist.

  Der Kippvorgang eines Fahrzeuges ist stets damit verbunden, daß im Vorfeld des Kippvorganges ein Teil der Räder, verglichen mit dem Normalzustand der bei Geradeausfahrt vorliegt, stärker belastet wird und daß ein Teil der Fahrzeugräder entsprechend entlastet wird. Beides führt zu einer Veränderung des Raddurchmessers, was zur Erkennung einer Kipptendenz ausgewertet werden kann. Somit werden mit der ersten Abfrage Räder erfaßt, die entlastet sind, das heißt, die eventuell abzuheben drohen. Mit der zweiten Abfrage werden Räder erfaßt, die stärker belastet sind, das heißt, die zusammengedrückt sind.

- Wenn für wenigstens ein Rad der Betrag einer Differenz, die aus dem Wert der Größe, die das Radverhalten quantitativ beschreibt und einem Vergleichswert gebildet wird, größer als ein entsprechender Schwellenwert ist.

  Mit Hilfe dieser Abfrage kann beispielsweise das aktuell vorliegende Radverhalten mit dem Radverhalten bei einer Geradeausfahrt verglichen werden. Aus diesem Vergleich kann auf eine Kipptendenz des Fahrzeuges geschlossen werden.

- Wenn für wenigstens ein Rad der Betrag einer Größe, die den zeitlichen Verlauf der das Radverhalten quantitativ beschreibenden Größe beschreibt, kleiner als ein entsprechender Schwellenwert ist.

- Wenn der Betrag einer der Neigungswinkel einer Radachse beschreibenden Größe größer als ein entsprechender Schwellenwert ist. Dabei wird die den Neigungswinkel einer Radachse beschreibende Größe vorteilhafterweise in Abhängigkeit der für die Räder der entsprechenden Radachse jeweils ermittelten Größen, die das Radverhalten quantitativ beschreiben, ermittelt.

Die vorstehend beschriebenen Abfragen werden zu einer ersten Art von Abfragen zusammengefaßt, mit deren Hilfe eine Kipptendenz eines Fahrzeuges um eine in Längsrichtung des Fahrzeuges orientierte Fahrzeugachse erfaßt werden kann. Ergänzend zu dieser ersten Art von Abfragen wird eine zweite Art verwendet. Welche Art von Abfragen zur Erkennung der Kipptendenz zum Einsatz kommt, wird vorteilhafterweise mit Hilfe des vorstehend beschriebenen Vergleichs, der auf dem für wenigstens ein Rad ermittelten Antriebs- und/oder Bremsschlupf basiert, ausgewählt.

Für die zweite Art von Abfragen bietet sich vorteilhafterweise an: Der Betrag einer Differenz, die aus einer die Fahrzeuggeschwindigkeit beschreibenden Größe und einem Geschwindigkeitsgrenzwert gebildet wird, wird mit einem entsprechenden Schwellenwert verglichen. Ist der Betrag der Differenz kleiner als der entsprechende Schwellenwert, so liegt für das Fahrzeug eine Kipptendenz vor. Der Geschwindigkeitsgrenzwert wird vorteilhafterweise wenigstens in Abhängigkeit einer die Schwerpunktshöhe des Fahrzeuges beschreibenden Größe ermittelt, wobei diese wenigstens in Abhängigkeit von der für wenigstens ein Rad ermittelten Größe, die das Radverhalten quantitativ beschreibt, ermittelt wird.

Weitere Vorteile sowie vorteilhafte Ausgestaltungen können den Unteransprüchen, der Zeichnung sowie der Beschreibung der Ausführungsbeispiele entnommen werden.

Zeichnung

Die Zeichnung besteht aus den Figuren 1 bis 4. Die Figuren 1a, 1b und 1c zeigen verschiedene Straßenfahrzeuge, bei denen das erfindungsgemäße Verfahren eingesetzt wird. Die Figuren 2a, 2b und 2c zeigen jeweils für die verschiedenen Straßenfahrzeuge, in einer Übersichtsanordnung die erfindungsgemäße Vorrichtung zur Durchführung des erfindungsgemäßen Verfahrens. In Figur 3 (bestehend aus den Teilfiguren 3a und 3b) sind mit Hilfe eines Ablaufdiagrammes die zur Durchführung des erfindungsgemäßen Verfahrens wesentlichen Schritte dargestellt. Figur 4 stellt in einer schematischen Darstellung den physikalischen Sachverhalt für ein Straßenfahrzeug bei Kurvenfahrt dar.

Es sei darauf hingewiesen, daß Blöcke mit derselben Bezeichnung in unterschiedlichen Figuren die selbe Funktion haben.

Ausführungsbeispiele

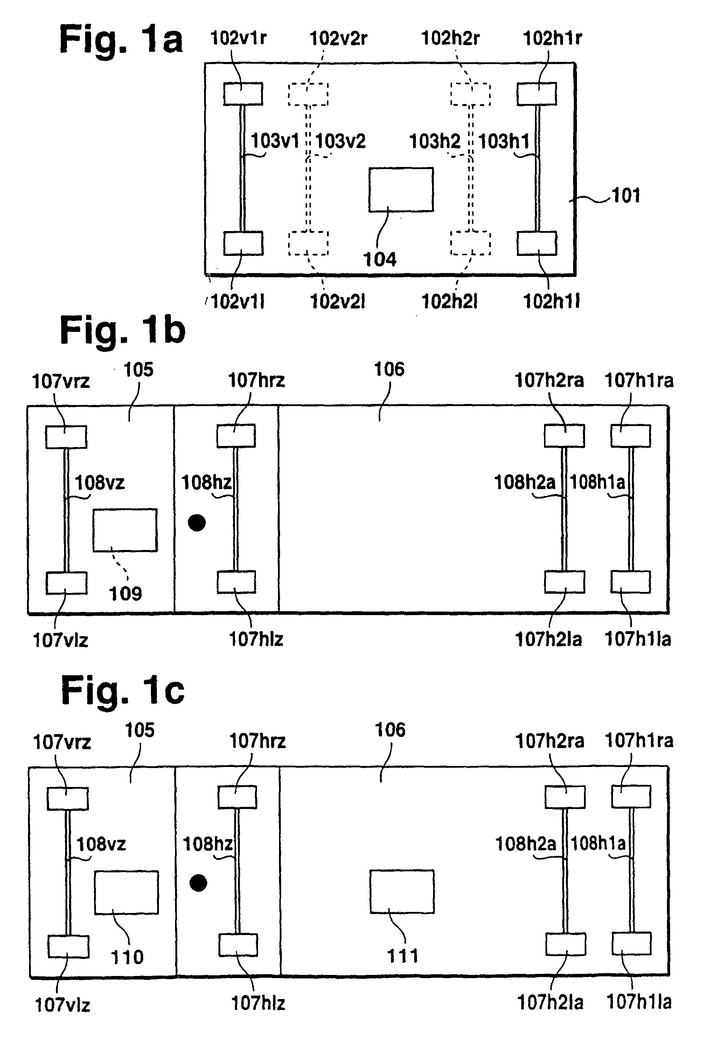

Zunächst soll auf die Figuren 1a, 1b und 1c eingegangen werden, die verschiedene Straßenfahrzeuge darstellen, bei denen das erfindungsgemäße Verfahren zum Einsatz kommen kann.

In Figur 1a ist ein einteiliges Fahrzeug 101 dargestellt. Bei diesem Fahrzeug kann es sich sowohl um einen Personenkraftwagen als auch um einen Nutzkraftwagen handeln. Bei dem in Figur 1a dargestellten einteiligen Fahrzeug 101 soll es sich um ein Fahrzeug mit wenigstens zwei Radachsen handeln, was durch die teilweise gestrichelte Darstellung angedeutet ist. Die Radachsen des Fahrzeuges 101 sind mit 103ix bezeichnet. Dabei gibt der Index i an, ob es sich um eine Vorderachse (v) oder um eine Hinterachse (h) handelt. Durch den Index x wird bei Fahrzeugen mit mehr als zwei Achsen angegeben, um welche der Vorder- bzw. Hinterachsen es sich handelt. Dabei gilt folgende Zuordnung: Der Vorderachse bzw. der Hinterachse, die der Fahrzeugberandung am nächsten ist, ist jeweils der Index x mit dem kleinsten Wert zugeordnet. Je weiter die jeweilige Radachse von der Fahrzeugberandung entfernt ist, desto größer ist der Wert des zugehörigen Index x. Den Radachsen 103ix sind die Räder 102ixj zugeordnet. Die Bedeutung der Indizes i bzw. x entspricht der vorstehend beschriebenen. Mit dem Index j wird angezeigt, ob sich das Rad auf der rechten (r) bzw. auf der linken (l) Fahrzeugseite befindet. Bei der Darstellung der Räder 102ixj wurde auf die Unterscheidung zwischen Einzelrädern bzw. Zwillingsrädern verzichtet. Ferner enthält das Fahrzeug 101 ein Steuergerät 104, in welchem die erfindungsgemäße Vorrichtung zur Durchführung des erfindungsgemäßen Verfahrens implementiert ist.

Zur Verdeutlichung der in Figur 1a gewählten Darstellung sei beispielhaft ausgeführt: Ein zweiachsiges Fahrzeug enthält eine Vorderachse 103v1 mit den ihr zugeordneten Rädern 102v1r bzw. 102v1l sowie eine Hinterachse 103h1 mit den ihr zugeordneten Rädern 102h1r bzw. 102h1l. Ein dreiachsiges Fahrzeug weist im Normalfall eine Vorderachse 103v1 mit den Rädern 102v1r bzw. 102v1l, sowie eine erste Hinterachse 103h1 mit den Rädern 102h1r bzw. 102h1l sowie eine zweite Hinterachse 103h2 mit den Rädern 102h2r bzw. 102h2l auf.

In Figur 1b ist eine Fahrzeugkombination, bestehend aus einer Zugmaschine 105 und einem Auflieger 106 dargestellt. Die gewählte Darstellung soll keine Einschränkung darstellen, denkbar ist auch eine Fahrzeugkombination, die aus einer Zugmaschine und einem Deichselanhänger besteht. Die Zugmaschine 105 soll die Radachsen 108iz aufweisen. Den Radachsen 108iz sind die entsprechenden Räder 107ijz zugeordnet. Die Bedeutung der Indizes i bzw. j entspricht der bereits im Zusammenhang mit Figur 1a beschriebenen. Der Index z gibt an, daß es sich um Radachsen bzw. Räder der Zugmaschine handelt. Ferner weist die Zugmaschine 105 ein Steuergerät 109 auf, mit dem eine Kipptendenz der Zugmaschine 105 und/oder eine Kipptendenz des Aufliegers 106 und/oder eine Kipptendenz der gesamten Fahrzeugkombination um eine in Längsrichtung orientierte Fahrzeugachse erkannt wird. Der Auflieger 106 soll zwei Radachsen 108ixa enthalten. Den beiden Radachsen 108ixa sind in entsprechender Weise die Räder 107ixja zugewiesen. Die Bedeutung der Indizes i bzw. x bzw. j entspricht der bereits im Zusammenhang mit Figur 1a dargestellten. Der Index a gibt an, daß es sich um Komponenten des Aufliegers 106 handelt. Die in Figur 1b dargestellte Anzahl von Radachsen für die Zugmaschine 105 bzw. für den Auflieger 106 soll keine Einschränkung darstellen. Das Steuergerät 109 kann anstelle in der Zugmaschine 105 auch im Auflieger 106 angeordnet sein.

In Figur 1c ist eine der in Figur 1b dargestellten Fahrzeugkombination entsprechende Fahrzeugkombination dargestellt.

Aus diesem Grund sind die Zugmaschine, der Auflieger, die Radachsen sowie die Räder mit den gleichen Bezugszeichen gekennzeichnet. Der wesentliche Unterschied zwischen Figur 1c und Figur 1b besteht darin, daß die Fahrzeugkombination gemäß Figur 1c zwei Steuergeräte aufweist. Der Zugmaschine 105 ist ein erfindungsgemäßes Steuergerät 110 zugeordnet. Dem Auflieger 106 ist ein erfindungsgemäßes Steuergerät 111 zugeordnet. In beiden Steuergeräten läuft ein Verfahren zur Erkennung einer Kipptendenz ab.

Die in den Figuren 1a, 1b und 1c gewählte Kennzeichnung durch die Indizes a, i, j, x sowie z ist für sämtliche Größen bzw. Komponenten, bei denen sie Verwendung findet, entsprechend.

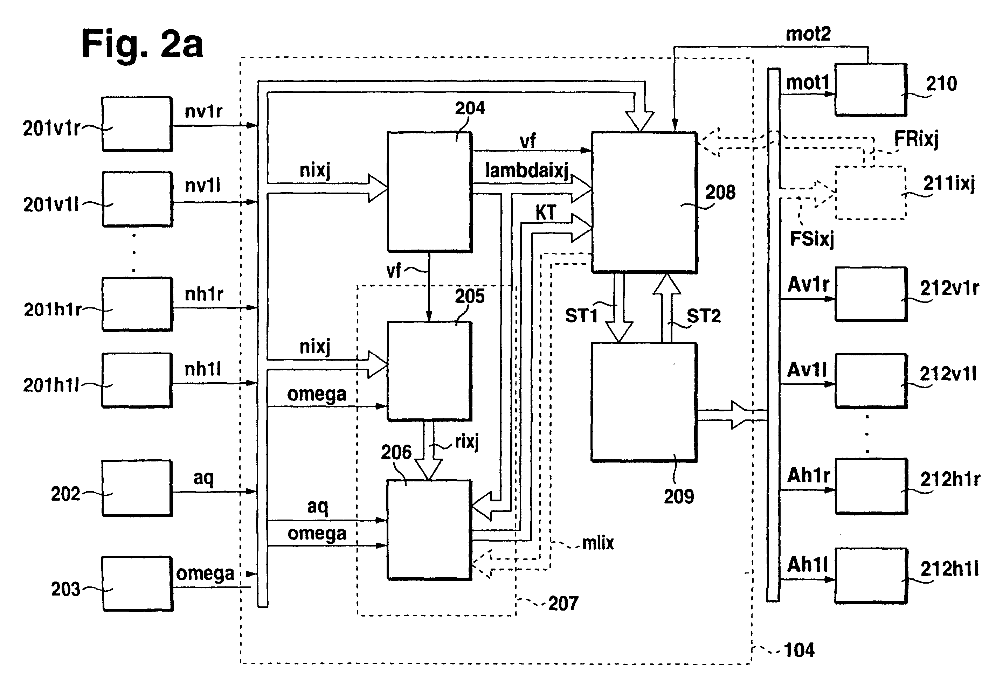

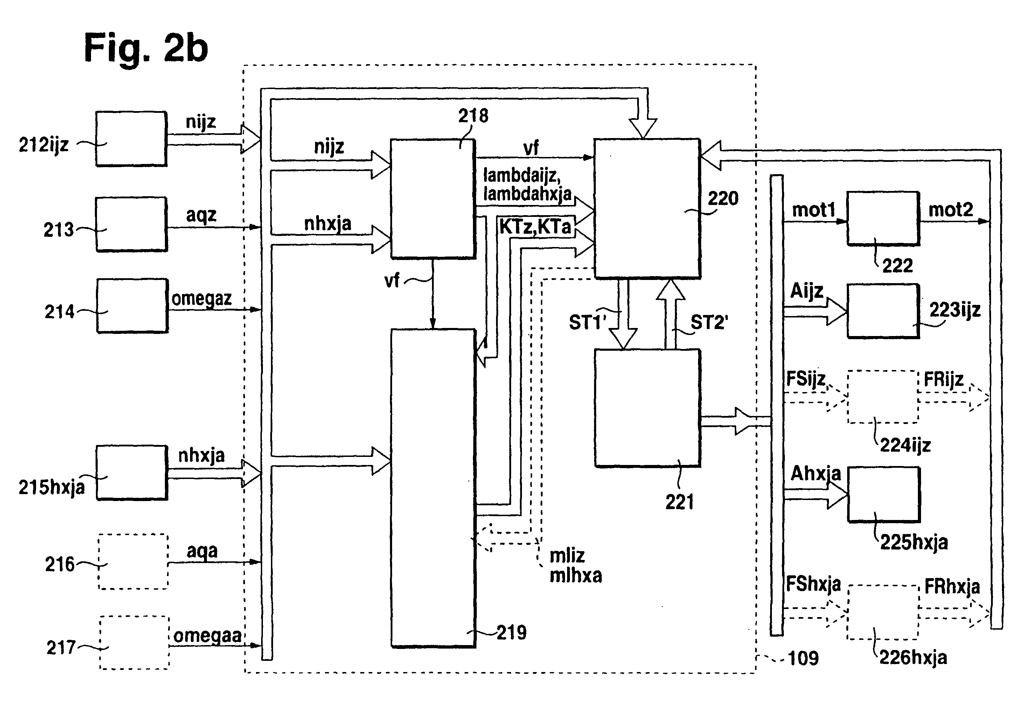

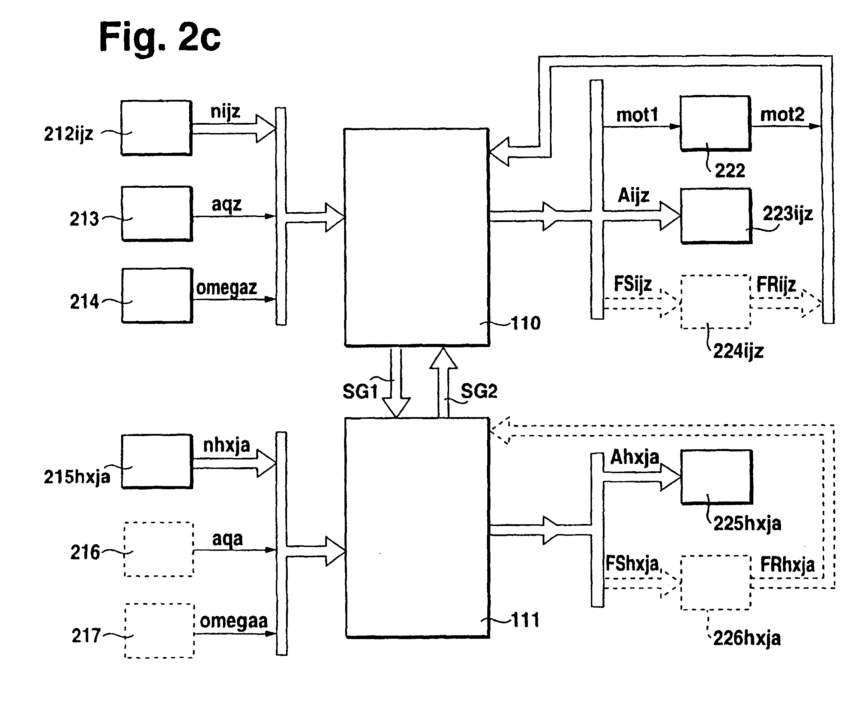

Im folgenden sollen anhand der Figuren 2a, 2b und 2c drei Ausführungsbeispiele besprochen werden, die auf die in den Figuren 1a, 1b und 1c dargestellten unterschiedlichen Fahrzeuge zurückgehen. Die für das in Figur 1a dargestellte Fahrzeug 101 im zugehörigen Steuergerät 104 implementierte erfindungsgemäße Vorrichtung wird anhand der Figur 2a beschrieben. Die für die in Figur 1b dargestellte Fahrzeugkombination im zugehörigen Steuergerät 109 implementierte erfindungsgemäße Vorrichtung, wird anhand der Figur 2b beschrieben. Bei der in Figur 1c dargestellten Fahrzeugkombination weist die Zugmaschine 105 ein eigenes Steuergerät 110 und der Auflieger 106 ein eigenes Steuergerät 111 auf. Das Zusammenwirken der beiden Steuergeräte 110 bzw. 111 wird anhand der Figur 2c beschrieben.

Zunächst soll mit Hilfe der Figur 2a das erste Ausführungsbeispiel beschrieben werden.

Bei dem Fahrzeug, welches dem ersten Ausführungsbeispiel zugrundeliegt, handelt es sich, wie in Figur 1a dargestellt, um ein einteiliges Fahrzeug. Ferner sei angenommen, daß dieses einteilige Fahrzeug wenigstens zwei Radachsen 103ix aufweist. Bei diesen beiden Radachsen soll es sich um die Vorderachse 103v1 mit den Rädern 102v1r bzw. 102v1l sowie um die Hinterachse 103h1 mit den Rädern 102h1r bzw. 102h1l handeln. Die zu diesen Rädern gehörenden Raddrehzahlsensoren 201v1r, 201v1l, 201h1r bzw. 201h1l sind in Figur 2a dargestellt. Je nach Anzahl der Radachsen des einteiligen Fahrzeuges können, wie in Figur 2a angedeutet, weitere Raddrehzahlsensoren 201ixj berücksichtigt werden. Mit den Raddrehzahlsensoren 201ixj werden die Größen nixj ermittelt, die jeweils die Raddrehzahl des entsprechenden Rades 102ixj beschreiben. Die Größen nixj werden Blöcken 204, 205 sowie 208 zugeführt.

Ferner sei angenommen, daß das Fahrzeug 101 einen Querbeschleunigungssensor 202 sowie einen Gierratensensor 203 enthält. An dieser Stelle sei bemerkt, daß die Verwendung des Querbeschleunigungssensors 202 bzw. die des Gierratensensors 203 keine Einschränkung darstellen soll. Beispielsweise kann anstelle der Ermittlung einer die Querbeschleunigung beschreibenden Größe aq mit Hilfe eines Querbeschleunigungssensors, diese Größe auch ausgehend von den Größen nixj ermittelt werden. Ebenso kann anstelle der Ermittlung einer die Gierrate des Fahrzeuges beschreibenden Größe omega mit Hilfe eines Gierratensensors 203, diese Größe ebenfalls ausgehend von den Größen nixj ermittelt werden.

Die die Querbeschleunigung des Fahrzeugs beschreibende Größe aq, die mit Hilfe des Querbeschleunigungssensors 202 ermittelt wird, wird sowohl dem Block 208 als auch einem Block 206 zugeführt. Die die Gierrate des Fahrzeuges beschreibende Größe omega, die mit Hilfe des Gierratensensors 203 ermittelt wird, wird den Blöcken 208, 205 sowie 206 zugeführt.

Im Block 204 wird in bekannter Weise aus den Größen nixj eine die Fahrzeuggeschwindigkeit beschreibende Größe vf ermittelt. Diese Größe vf wird ausgehend vom Block 204 den Blökken 205 bzw. 208 zugeführt. Ferner werden im Block 204 ausgehend von den Größen nixj, sowie der Größe vf, in bekannter Weise Größen lambdaixj ermittelt, die den Antriebs- und/oder Bremsschlupf der Räder beschreiben. Diese Größen lambdaixj werden ausgehend vom Block 204 sowohl dem Block 206 als auch dem Block 208 zugeführt.

Im Block 205 wird ausgehend von der Größe vf, den Größen nixj sowie der Größe omega die Größen rixj ermittelt, die das Radverhalten der Räder quantitativ beschreiben. Diese Größen rixj sind von der auf das jeweilige Rad wirkenden Radlast abhängig. Insbesondere handelt es sich bei den Größen rixj um die dynamischen Rollradien der Räder, die mit Hilfe der Gleichung

$$nxj = \frac{vf \pm a \cdot omega}{nixj}$$

ermittelt werden, wobei die in der Gleichung enthaltene Größe a die halbe Spurweite des Fahrzeuges beschreibt. Für die kurvenäußeren Räder wird das Pluszeichen verwendet, für die kurveninneren Räder das Minuszeichen.

An dieser Stelle sei bemerkt, daß die in obiger Gleichung verwendete Größe omega, die die Gierrate des Fahrzeuges beschreibt, auch durch einen aus der Querbeschleunigung des Fahrzeuges und der Fahrzeuggeschwindigkeit hergeleiteten Ausdruck ersetzt werden kann. In diesem Fall müßte dem Block 205 anstelle der Größe omega die Größe aq zugeführt werden.

Die das Radverhalten quantitativ beschreibenden Größen rixj, die den dynamischen Rollradien der Räder entsprechen, werden ausgehend vom Block 205 dem Block 206 zugeführt. Da es sich bei den das Radverhalten quantitativ beschreibenden Größen rixj um die dynamischen Rollradien handelt, beschreiben diese Größen den Durchmesser bzw. entsprechend den Radius den jeweiligen Rades.

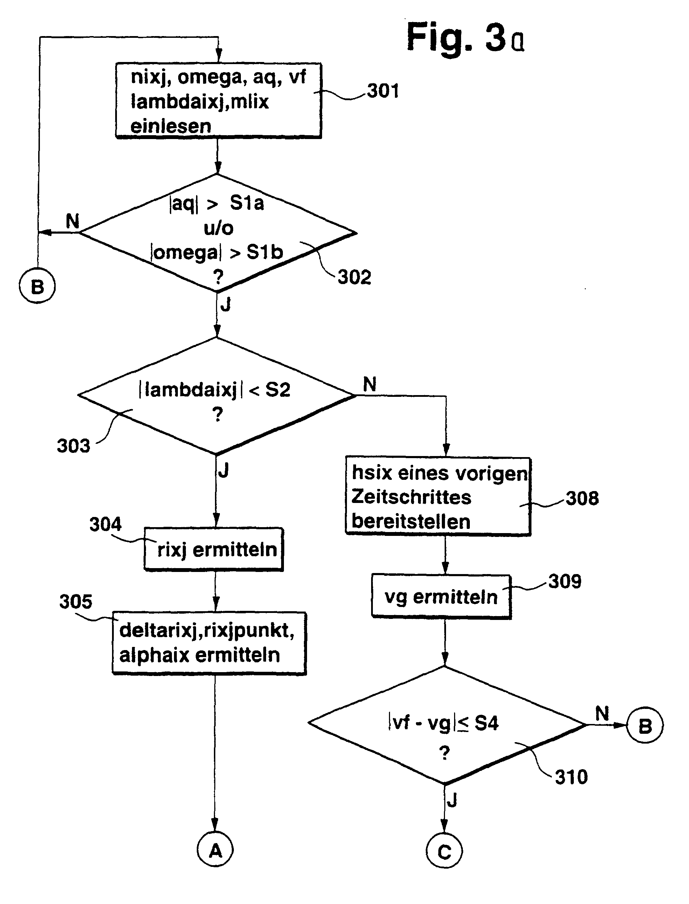

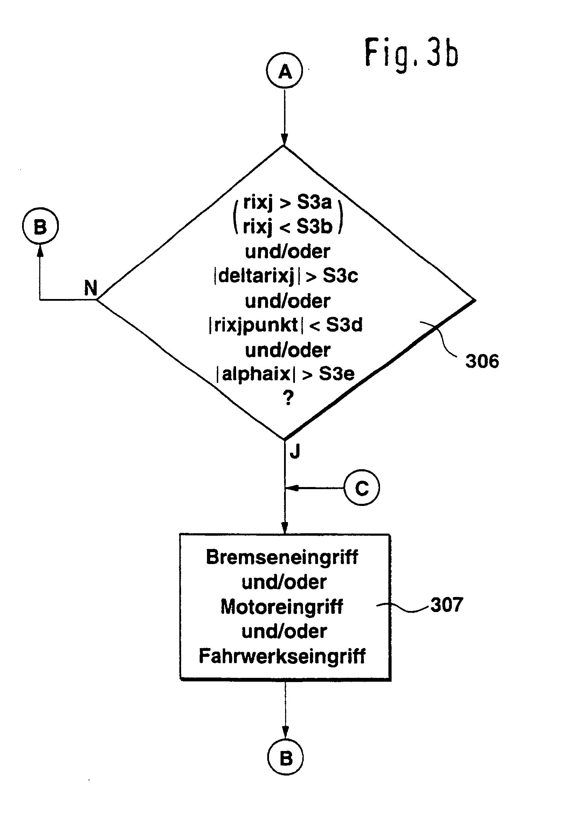

Im Block 206 wird ausgehend von den ihm zugeführten Größen lambdaixj, rixj, aq, omega sowie den alternativ ihm zugeführten Größen mlix, die jeweils die achsbezogene Last beschreiben, die Erkennung, ob eine Kipptendenz des Fahrzeuges um eine Längsrichtung des Fahrzeuges orientierte Fahrzeugachse vorliegt, durchgeführt. Im Block 206 werden zur Erkennung, ob für das Fahrzeug eine Kipptendenz vorliegt, ausgehend von dem ihm zugeführten Größen verschiedene Abfragen durchgeführt. Diese verschiedenen Abfragen werden in der noch zu beschreibenden Figur 3 vorgestellt. Wird im Block 206 erkannt, daß für das Fahrzeug eine Kipptendenz um eine in Längsrichtung des Fahrzeuges orientierte Fahrzeugachse vorliegt, so wird eine Größe KT erzeugt, die ausgehend vom Block 206 dem Block 208 zugeführt wird. Durch diese Größe KT wird dem Regler bzw. Fahrzeugregler 208 mitgeteilt, ob eine Kipptendenz des Fahrzeuges vorliegt oder nicht. In Figur 2a sind die beiden im Steuergerät enthaltenen erfindungswesentlichen Komponenten 205 bzw. 206 zu einem Block 207 zusammengefaßt.

Mit 208 ist der im Steuergerät 104 implementierte Regler bzw. Fahrzeugregler 208 bezeichnet. Bei dem Regler 208 handelt es sich beispielsweise um einen Regler, der in seiner Grundfunktion eine die Fahrdynamik des Fahrzeuges beschreibende Größe, beispielsweise eine von der Querbeschleunigung und/oder der Gierrate des Fahrzeuges abhängige Größe, durch Eingriffe in die Radbremsen und/oder in den Motor regelt. Solch ein Regler ist beispielsweise aus der in der Automobiltechnischen Zeitschrift (ATZ) 16, 1994, Heft 11, auf den Seiten 674 bis 689 erschienen Veröffentlichung "FDR - die Fahrdynamikregelung von Bosch" bekannt. Die im Block 208 in ihrer Grundfunktion stattfindende Regelung basiert in bekannter Weise auf den dem Block 208 zugeführten Größen nixj, aq, omega, vf, lambdaixj, einer Größe mot2, die beispielsweise die Motordrehzahl des Motors 210 beschreibt und die ausgehend von dem Motor 210 dem Block 208 zugeführt wird, sowie Größen ST2, die ausgehend von einem Block 209, welcher die Ansteuerlogik für die im Fahrzeug enthaltenen Aktuatoren darstellt, dem Block 208 zugeführt werden. An dieser Stelle sei bemerkt, daß die vorstehend für die Grundfunktion des Reglers beschriebene Regelung, keine Einschränkung darstellen soll. Alternativ zu dieser Regelung kann im Regler 208 als Grundfunktion auch eine Bremsschlupfregelung, die in die Radbremsen eingreift und/oder eine Antriebsschlupfregelung, die in die Radbremsen und/oder in den Motor eingreift, implementiert sein.

Zusätzlich zu der im Block 208 in der Grundfunktion implementierten Regelung ist im Regler 208 eine Umkippvermeidung implementiert. Diese Umkippvermeidung kann der Regelung der Grundfunktion quasi übergeordnet sein. Die Umkippvermeidung wird im wesentlichen ausgehend von den Größen KT, die im Block 206 im Rahmen der Umkipperkennung erzeugt werden, ausgeführt. Mit den Größen KT kann dem Regler 208 zum einen mitgeteilt werden, daß eine Kipptendenz des Fahrzeuges um eine in Längsrichtung des Fahrzeuges orientierte Fahrzeugachse vorliegt, außerdem kann dem Regler 208 mitgeteilt werden, wie stark diese Kipptendenz ist. Außerdem können die Größen KT Informationen darüber enthalten, wie bzw. über welche Räder das Fahrzeug zu kippen droht.

Für eine Art der Umkipperkennung, die im Block 206 durchgeführt wird, sind im Block 206 die achsbezogenen Radlasten mlix erforderlich. Diese werden im Regler 208 beispielsweise in bekannter Weise aus den Raddrehzahlen ermittelt, und ausgehend vom Block 208 dem Block 206 zugeführt.

Der Regler 208 erzeugt Größen ST1, die der Ansteuerlogik 209, mit der die dem Fahrzeug zugeordneten Aktuatoren angesteuert werden, zugeführt werden. Mit den Größen ST1 wird der Ansteuerlogik 209 mitgeteilt, welche Aktuatoren wie angesteuert werden sollen. Die Größen ST1 werden im Regler 208 beispielsweise wie folgt generiert. Liegt für das Fahrzeug keine Kipptendenz vor, so werden die Größen ST1 gemäß der für die Grundfunktion implementierten Regelung erzeugt. Handelt es sich beispielsweise um eine in der vorstehend aufgeführten Veröffentlichung "FDR - die Fahrdynamikregelung von Bosch" beschriebene Regelung, so enthalten die Größen ST1 eine Information darüber, welches bzw. welche Räder wie gebremst werden sollen bzw. in welchem Maße das vom Motor abgegebene Motormoment beeinflußt werden soll. Liegt für das Fahrzeug eine Kipptendenz vor, so sind zwei Vorgehensweisen für die Bildung der Größen ST1 denkbar. Zum einen können die Größen ST1*, die gemäß des für die Grundfunktion implementierten Regelungskonzeptes ermittelt wurden, so modifiziert werden, daß ein Umkippen des Fahrzeuges um eine in Längsrichtung des Fahrzeuges orientierte Fahrzeugachse vermieden wird. Zum anderen können die gemäß des für die Grundfunktion implementierten Regelungskonzeptes ermittelten Größen ST1* durch Größen ersetzt werden, die erzeugt werden, um ein Umkippen des Fahrzeuges zu vermeiden.

Um ein Umkippen des Fahrzeuges um eine in Längsrichtung des Fahrzeuges orientierte Fahrzeugachse zu vermeiden, sind beispielsweise folgende Eingriffe in die Aktuatoren des Fahrzeuges denkbar: Zum einen kann durch Bremsen bzw. durch Zurücknahme des Motormomentes eine Verminderung der Fahrzeuggeschwindigkeit erreicht werden. Zum anderen kann durch radindividuelle Bremseingriffe gezielt dem Umkippen des Fahrzeuges entgegengewirkt werden. Zudem kann durch Eingriffe in die dem Fahrzeug zugeordneten Fahrwerksaktuatoren eine Wankbewegung des Fahrzeuges begrenzt werden.

Im Block 209, der Ansteuerlogik, werden die vom Regler 208 erzeugten Größen ST1 in Ansteuersignale für den Motor 210 sowie in Ansteuersignale für die Aktuatoren des Fahrzeuges umgesetzt. Bei den Aktuatoren handelt es sich beispielsweise um Fahrwerksaktuatoren 211ixj, mit denen das Verhalten des Fahrwerkes beeinflußbar ist, sowie um Aktuatoren 212ixj, mit denen an den entsprechenden Rädern eine Bremskraft erzeugbar ist. Zur Ansteuerung des Motors 210 erzeugt die Ansteuerlogik ein Signal mot1, mit dem beispielsweise die Drosselklappenstellung des Motors beeinflußbar ist. Zur Ansteuerung der Fahrwerksaktuatoren 211ixj erzeugt die Ansteuerlogik 209 Signale Fsixj, mit denen die von den Fahrwerksaktuatoren 211ixj realisierte Dämpfung bzw. Steifigkeit beeinflußbar ist. Zur Ansteuerung der Aktuatoren 212ixj, die insbesondere als Bremsen ausgebildet sind, erzeugt die Ansteuerlogik 209 Signale Aixj, mit denen die von den Aktuatoren 212ixj an den entsprechenden Rädern erzeugten Bremskräfte beeinflußbar sind. Die Ansteuerlogik 209 erzeugt Größen ST2, die dem Regler 208 zugeführt werden, und die eine Information über die Ansteuerung der einzelnen Aktuatoren enthalten.

Mit den Fahrwerksaktuatoren 211ixj wird das Fahrwerk des Fahrzeuges beeinflußt. Damit der Regler den Istzustand der Fahrwerksaktuatoren 211ixj kennt, werden ausgehend von den Fahrwerksaktuatoren 211ixj dem Regler 208 Signale Frixj zugeführt.

An dieser Stelle sei bemerkt, daß neben den in Figur 2a dargestellten Aktuatoren auch der Einsatz von sogenannten Retardern denkbar ist.

Bei der in Figur 2a zum Einsatz kommenden Bremsanlage kann es sich um eine hydraulische oder pneumatische oder elektrohydraulische oder elektropneumatische Bremsanlage handeln.

Mit Hilfe von Figur 2b wird ein zweites Ausführungsbeispiel, dem die in Figur 1b dargestellte Fahrzeugkombination zugrundeliegt, beschrieben. Bei der Beschreibung der in Figur 2b dargestellten Komponenten wird, soweit möglich, auf die Beschreibung der Figur 2a zurückgegriffen.

Entsprechend der Darstellung in Figur 2a ist die Zugmaschine 105 mit Raddrehzahlsensoren 212ijz, einem Querbeschleunigungssensor 213 sowie einem Gierratensensor 214 ausgestattet. Der Auflieger 106 soll wenigstens mit Raddrehzahlsensoren 215hxja ausgestattet sein. Ergänzend kann der Auflieger mit einem Querbeschleunigungssensor 216 sowie einem Gierratensensor 217 ausgestattet sein. Im Normalfall, d.h. für einen stationären Betriebszustand, wären für den Auflieger 106 der Querbeschleunigungssensor 216 sowie der Gierratensensor 217 nicht erforderlich, da die auf den Auflieger 106 wirkende Querbeschleunigung bzw. die am Auflieger 106 auftretende Gierrate jeweils der Querbeschleunigung bzw. der Gierrate der Zugmaschine 105 entspricht. Im instationären Betriebszustand kann sowohl die Querbeschleunigung als auch die Gierrate des Aufliegers 106 in bekannter Weise aus den Raddrehzahlen des Aufliegers ermittelt werden. Aus diesem Grund sind in Figur 2b sowohl der Querbeschleunigungssensor 216 als auch der Gierratensensor 217 strichliniert dargestellt.

Der Block 218 entspricht in seiner Funktion dem in Figur 2a dargestellten Block 204. Der Block 219 entspricht in seiner Funktion den in Figur 2a zum Block 207 zusammengefaßten Blöcken 205 sowie 206. Der Block 220 entspricht in seiner Funktion dem in Figur 2a dargestellten Block 208. Der Block 221 entspricht in seiner Funktion dem in Figur 2a dargestellten Block 209. Die für die Zugmaschine 105 ermittelten Größen nijz, aqz bzw. omegaz werden wie im Zusammenhang mit Figur 2a beschrieben, in entsprechender Weise den Blöcken 218, 219 bzw. 220 zugeführt. Ausgehend von der Darstellung in Figur 2a sind, was die Sensoren angeht, ergänzend die Sensoren für den Auflieger 106 zu berücksichtigen. Die mit Hilfe der Sensoren 215hxja, 216 sowie 217 für den Auflieger erzeugten Größen nhxja, aqa bzw. omegaa werden im Steuergerät 109 in entsprechender Weise wie die für die Zugmaschine 105 erzeugten Größen nijz, aqz bzw. omegaz verarbeitet. Dies bedeutet, daß die Größen nhxja sowohl dem Block 218 als auch dem Block 220 zugeführt werden. Sofern vorhanden, werden die Größen aqa bzw. omegaa den Blöcken 219 bzw. 220 zugeführt.

Im Block 218 wird entsprechend dem Block 204, ausgehend von den Größen nijz bzw. nhxja eine die Geschwindigkeit der Fahrzeugkombination beschreibende Größe vf ermittelt. Diese wird dem Block 219 bzw. dem Block 220 zugeführt. Ebenfalls werden im Block 218 in entsprechender Weise wie im Block 204 die Größen lambdaijz bzw. lambdahxja ermittelt, die sowohl dem Block 219 als auch dem Block 220 zugeführt werden. Im Block 219 wird entsprechend der Vorgehensweise im Block 207 ermittelt, ob für die Fahrzeugkombination und/oder für die Zugmaschine 105 und/oder für den Auflieger 106 eine Kipptendenz vorliegt. Hierzu werden im Block 219 sowohl für die Räder der Zugmaschine 105 als auch für die Räder des Aufliegers 106 die dynamischen Rollradien ermittelt. Das Ergebnis der Erkennung der Kipptendenz wird ausgehend vom Block 219 dem Block 220 durch die Größen KTz bzw. KTa mitgeteilt. Die Größe KTz enthält dabei die Information für die Zugmaschine 105, die Größe KTa enthält die Information für den Auflieger.

Entsprechend der Vorgehensweise, wie sie im Zusammenhang mit dem Block 208 beschrieben wurde, werden im Block 220 Größen ST1' ermittelt, die der Ansteuerlogik 221 zugeführt werden. Ebenfalls werden im Block 220 die achsbezogenen Lasten mliz der Zugmaschine, sowie die achsbezogenen Lasten mlhxa des Aufliegers ermittelt, die dem Block 219 zugeführt werden. Entsprechend der Figur 2a werden im Block 221 Größen ST2' ermittelt, die dem Regler 220 zugeführt werden. Ausgehend von den dem Block 221 zugeführten Größen ST1' werden im Block 221 die Ansteuersignale für den Motor, sowie die Ansteuersignale für die Aktuatoren ermittelt. Entsprechend der Figur 2a sind dies für die Zugmaschine 105 folgende Ansteuersignale: Für den Motor 222 wird das Ansteuersignal mot1 ermittelt. Für die Aktuatoren 223ijz, mit denen Bremskräfte erzeugbar sind, werden die Ansteuersignale Aijz ermittelt. Für eventuell der Zugmaschine zugeordnete Fahrwerksaktuatoren 224ijz werden die Ansteuersignale Fsijz ermittelt. Zusätzlich werden in der Ansteuerlogik 221 für die im Auflieger enthaltenen Aktuatoren 225hxja, mit denen Bremskräfte erzeugbar sind, die Ansteuersignale Ahxja ermittelt. Sofern der Auflieger Fahrwerksaktuatoren 226hxja aufweist, werden in der Ansteuerlogik 221 Ansteuersignale Fshxja für die Fahrwerksaktuatoren ermittelt. Entsprechend Figur 2a werden dem Regler 220, ausgehend vom Motor 222 eine Größe mot2, ausgehend von den Fahrwerksaktuatoren 224ijz Größen Frijz sowie ausgehend von den Fahrwerksaktuatoren 226hxja Größen Frhxja zugeführt.

Mit Hilfe von Figur 2c wird ein drittes Ausführungsbeispiel beschrieben, dem die in Figur 1c dargestellte Fahrzeugkombination zugrundeliegt. Bei diesem Ausführungsbeispiel soll die Zugmaschine 105 mit einem Steuergerät 110 und der Auflieger 106 mit einem Steuergerät 111 ausgestattet sein. An dieser Stelle sei bemerkt, daß die Funktion von Komponenten bzw. die Bedeutung von Größen, die in Figur 2c verwendet werden und die bereits in Figur 2b dargestellt sind, identisch sind. Bezüglich der Steuergeräte 110 bzw. 111 kann die Zuführung der Eingangsgrößen bzw. die Ausgabe der Ausgangsgrößen den Figuren 2a bzw. 2b entnommen werden. Das Steuergerät 110 entspricht im wesentlichen dem in Figur 2a dargestellten Steuergerät 104. Um zu dem Steuergerät 110 zu gelangen, muß das Steuergerät 104 im Regler 208 dahingehend modifiziert werden, daß es zusätzliche Größen SG1 ermitteln und ausgeben kann, bzw. zusätzliche Größen SG2 aufnehmen und verarbeiten kann. Das Steuergerät 111 ist ebenfalls aus dem Steuergerät 104 in Figur 2a ableitbar. Hierzu muß der Regler 208 dahingehend abgeändert werden, daß er zusätzliche Größen SG2 ermitteln und ausgeben kann, sowie zusätzliche Größen SG1 empfangen und verarbeiten kann. Da der Auflieger als Aktuatoren lediglich über Bremsen 225hxja bzw. Fahrwerksaktuatoren 226hxja verfügt, muß ferner der in Figur 2a dargestellte Regler 208 bzw. die Ansteuerlogik 209 dahingehend modifiziert werden.

Da die Fahrzeugkombination zwei getrennte Steuergeräte 110 bzw. 111 aufweist, ist zur Koordination der beiden Steuergeräte der Austausch von Daten bzw. Größen SG1 bzw. SG2 erforderlich, um Eingriffe der beiden Steuergeräte zu koordinieren. Beispielsweise kann über die Größen SG1 bzw. SG2 ausgetauscht werden, welche Aktuatoren jeweils betätigt werden. Alternativ ist aber auch denkbar, daß die beiden Steuergeräte 110 bzw. 111 autonom arbeiten. In diesem Fall ist zwischen den beiden Steuergeräten kein Austausch von Daten bzw. Größen SG1 bzw. SG2 erforderlich.

Mit Hilfe des in Figur 3 dargestellten Ablaufdiagrammes soll der Ablauf des erfindungsgemäßen Verfahrens dargestellt werden. Das in Figur 3 dargestellte Ablaufdiagramm beschreibt den Ablauf des erfindungsgemäßen Verfahrens, wie es für ein in Figur 1a dargestelltes einteiliges Fahrzeug abläuft, dem die erfindungsgemäße Vorrichtung nach Figur 2a zugrundeliegt.

Das erfindungsgemäße Verfahren beginnt mit einem Schritt 301, in welchem die Größen nixj, omega, aqa, vf, lambdaixj sowie mlix eingelesen werden. Im Anschluß an den Schritt 301 wird ein Schritt 302 ausgeführt. An dieser Stelle sei die Bedeutung des in Figur 3 verwendeten Zeichens "u/o" erläutert. Das Zeichen "u/o" soll die Abkürzung für die Verknüpfung "und/oder" darstellen.

Das in Figur 3 dargestellte erfindungsgemäße Verfahren läuft im wesentlichen in den beiden zum Block 207 zusammengefaßten Blöcken 205 bzw. 206 ab.

Mit der im Schritt 302 stattfindenden Abfrage wird ermittelt, ob ein Fahrzustand vorliegt, bei dem eine Kipptendenz des Fahrzeuges um eine in Längsrichtung des Fahrzeuges orientierte Fahrzeugachse auftreten kann. Hierzu wird im Schritt 302 ermittelt, ob der Betrag der die Querbeschleunigung des Fahrzeuges beschreibenden Größe aq größer als ein erster Schwellenwert S1a ist und/oder ob der Betrag der die Gierrate des Fahrzeuges beschreibende Größe omega größer als ein zweiter Schwellenwert S1b ist.

Die alternative Verknüpfung der beiden Teilabfragen im Schritt 302 hat folgende Gründe: Zum einen kann der Fall vorliegen, daß dem Block 206 entweder die die Querbeschleunigung beschreibende Größe aq oder die die Gierrate beschreibende Größe omega zugeführt werden. In diesem Fall kann lediglich eine der beiden Teilabfragen ausgeführt werden. Andererseits kann der Fall vorliegen, daß dem Block 206 beide Größen zugeführt werden. In diesem Fall kann entweder eine der beiden Teilabfragen ausgeführt werden oder können, um die Aussage sicherer zu machen, beide Teilabfragen gleichzeitig ausgeführt werden. Ist im Schritt 302 wenigstens eine der beiden Teilabfragen erfüllt, so wird im Anschluß an den Schritt 302 ein Schritt 303 ausgeführt. Ist dagegen im Schritt 302 keine der beiden Teilabfragen erfüllt, so wird anschließend an den Schritt 302 erneut der Schritt 301 ausgeführt.

Im Schritt 303 wird der Betrag der den Antriebs- und/oder Bremsschlupf beschreibende Größe lambdaixj mit einem Schwellenwert S2 verglichen. Die im Schritt 303 stattfindende Abfrage wird aus folgendem Grund durchgeführt: Die im Schritt 304 stattfindende Ermittlung der das Radverhalten quantitativ beschreibenden Größen rixj, die die dynamischen Rollradien der Räder darstellen, kann nur durchgeführt werden, wenn die Räder quasi schlupffrei sind, d.h., wenn der Antriebs- und/oder Bremsschlupf der Räder kleiner als ein vorgegebener Schwellenwert ist. Ist dies nicht erfüllt, so können die das Radverhalten quantitativ beschreibenden Größen rixj nicht fehlerfrei ermittelt werden.

Wird im Schritt 303 festgestellt, daß der Betrag der Größe lambdaixj kleiner als der entsprechende Schwellenwert ist, so wird im Anschluß an den Schritt 303 ein Schritt 304 ausgeführt. Wird dagegen im Schritt 303 festgestellt, daß der Betrag der Größe lambdaixj größer als der entsprechende Schwellenwert S2 ist, so wird im Anschluß an den Schritt 303 ein Schritt 308 ausgeführt.

An dieser Stelle sei bemerkt, daß die in den einzelnen Schritten verwendete indizierte Darstellung, als Beispiel sei hier lambdaixj genannt, bedeuten soll, daß die einzelnen Schritte für ein beliebiges einzelnes Rad oder für eine beliebige Anzahl von Rädern oder für alle Räder des Fahrzeuges ausgeführt werden sollen.

Mit der im Schritt 303 stattfindenden Abfrage wird entschieden, ob eine erste oder eine zweite Art von Abfragen zur Erkennung, ob eine Kipptendenz des Fahrzeuges vorliegt. Wird im Schritt 303 festgestellt, daß der Betrag des Radschlupfes kleiner als der entsprechende Schwellenwert ist, so kann eine erste Art der Erkennung, die sich aus den Schritten 304, 305 sowie 306 zusammensetzt, durchgeführt werden. Wird dagegen im Schritt 303 festgestellt, daß der Betrag des Radschlupfes größer als der Schwellenwert ist, so wird eine zweite Art von Abfrage, die sich aus den Schritten 308, 309 sowie 310 zusammensetzt, durchgeführt.

Im Schritt 304 werden mit Hilfe der o.a. Gleichung die das Radverhalten quantitativ beschreibenden Größen ermittelt. Diese Größen können nur ermittelt werden, wenn kein allzu großer Radschlupf vorliegt, d. h., diese Größen können nur ermittelt werden, wenn die Radgeschwindigkeiten und die Fahrzeuggeschwindigkeit nicht allzusehr voneinander abweichen. Weichen die Radgeschwindigkeiten und die Fahrzeuggeschwindigkeit zu sehr voneinander ab, wie es beispielsweise der Fall ist, wenn einzelne Räder starken Schlupf aufweisen, so kann es aufgrund der in diesem Fahrzeugzustand ermittelten Größen rixj, im Schritt 306 zu Fehlentscheidungen kommen. Anschließend an den Schritt 304 wird ein Schritt 305 ausgeführt. Im Schritt 305 werden die Größen deltarixj, rixjpunkt sowie alphaix ermittelt. Bei der Größe deltarixj handelt es sich um eine Differenz, die aus dem aktuellen Wert, der das Radverhalten quantitativ beschreibenden Größe rixj und einem Wert, der das Radverhalten quantitativ beschreibenden Größe, der bei einer Geradeausfahrt ermittelt wurde, gebildet wird.

Der Wert, der der das Radverhalten quantitativ beschreibenden Größe bei Geradeausfahrt entspricht, wird von Zeit zu Zeit in geeigneten Fahrsituationen ermittelt und in einem entsprechenden Speicher zwischengespeichert.

Bei der Größe rixjpunkt handelt es sich um eine Größe, die den zeitlichen Verlauf der das Radverhalten quantitativ beschreibenden Größe rixj darstellt. Insbesondere entspricht die Größe rixjpunkt der zeitlichen Ableitung der Größe rixj. Bei der Größe alphaix handelt es sich um eine den Neigungswinkel einer Radachse beschreibenden Größe. Die Größe alphaix wird gemäß der Gleichung

$$alpahix = \left| \frac{rixl\text{-}rixr}{2 \cdot a} \right|$$

ermittelt. Wie diese Gleichung zeigt, wird ausgehend, von den für die beiden Räder der Radachse ermittelten Größen, die jeweils das Radverhalten quantitativ beschreiben, eine die Neigung der Radachse beschreibende Größe ermittelt. Außerdem geht in die Größe alphaix die Spurweite 2a des Fahrzeuges ein. Obige Gleichung für den Neigungswinkel alphaix stellt eine Näherung dar, die für kleine Winkel alphaix gilt.

Im Anschluß an den Schritt 305 wird ein Schritt 306 ausgeführt. Mit Hilfe des Schrittes 306 wird erkannt, ob für das Fahrzeug eine Kipptendenz um eine in Längsrichtung des Fahrzeuges orientierte Fahrzeugachse besteht. Die im Schritt 306 aufgeführten Einzelabfragen werden unter Verwendung der im Schritt 305 ermittelten Größen, die wiederum in Abhängigkeit des im Schritt 304 ermittelten aktuellen Wertes der das Radverhalten quantitativ beschreibenden Größe rixj ermittelt werden, ausgeführt. Durch die im Schritt 306 gewählte Darstellung soll folgendes zum Ausdruck gebracht werden: Entweder kann das erfindungsgemäße Verfahren so aufgebaut sein, daß generell lediglich eine dieser vier Teilabfragen implementiert ist oder aber daß ein Teil dieser Teilabfragen implementiert ist oder aber daß alle Teilabfragen implementiert sind.

In einer ersten Teilabfrage wird ermittelt, ob der aktuelle Wert der Größe rixj größer als ein erster Schwellenwert S3a ist. Der erste Schwellenwert S3a soll dabei den Radius des unbelasteten Rades darstellen. Mit Hilfe dieser Abfrage wird folglich festgestellt, ob der dynamische Rollradius eines Rades des Fahrzeuges aufgrund der Kipptendenz des Fahrzeuges größer als der eines unbelasteten Rades ist. Mit dieser Abfrage wird festgestellt, ob bei einer Kurvenfahrt die kurveninneren Räder abzuheben drohen. Die erste Teilabfrage enthält eine weitere Abfrage, mit der festgestellt wird, ob der aktuelle Wert der Größe rixj kleiner als ein zweiter Schwellenwert S3b ist. Mit dieser Abfrage werden Räder erfaßt, die sich auf der Kurvenaußenseite befinden, und die aufgrund einer Kipptendenz des Fahrzeuges stark zusammengedrückt werden. Mit Hilfe der ersten Teilabfrage wird somit die absolute Größe des dynamischen Rollradius zur Erkennung der Kipptendenz des Fahrzeuges mit entsprechenden Schwellenwerten verglichen. Eine Kipptendenz des Fahrzeuges liegt dann vor, wenn entweder der dynamische Rollradius eines kurveninneren Rades größer als der Schwellenwert S3a ist oder wenn der dynamische Rollradius eines kurvenäußeren Rades kleiner als der Schwellenwert S3b ist.

In einer zweiten Teilabfrage wird festgestellt, ob der Betrag der Differenz deltarixj größer als ein dritter Schwellenwert S3c ist. Mit dieser Abfrage wird die relative Änderung des dynamischen Rollradius, die sich bei einer Kurvenfahrt ausgehend von einer Geradeausfahrt ergibt, zur Erkennung, ob eine Kipptendenz des Fahrzeuges vorliegt, ausgewertet. Eine Kipptendenz des Fahrzeuges liegt dann vor, wenn der Betrag der Differenz größer als der entsprechende Schwellenwert S3c ist.

In einer dritten Teilabfrage wird festgestellt, ob der Betrag der Größe rixjpunkt, die den zeitlichen Verlauf der das Radverhalten quantitativ beschreibenden Größe rixj beschreibt, kleiner als ein vierter Schwellenwert S3d ist. Eine Kipptendenz des Fahrzeuges liegt dann vor, wenn der Beag der den zeitlichen Verlauf beschreibenden Größe kleiner als der vierte Schwellenwert S3d ist.

In einer vierten Teilabfrage wird festgestellt, ob der Betrag der den Neigungswinkel einer Radachse beschreibenden Größe alphaix größer als ein fünfter Schwellenwert S3e ist. Eine Kipptendenz des Fahrzeuges liegt dann vor, wenn der Betrag der Größe alphaix größer als der Schwellenwert S3e ist.

Mit Hilfe der im Schritt 306 ablaufenden Teilabfragen wird die Kipptendenz eines Fahrzeuges um eine in Längsrichtung des Fahrzeuges orientierte Fahrzeugachse dann erkannt, wenn wenigstens eine der vier Teilabfragen erfüllt ist. An dieser Stelle sei bemerkt, daß es auch sinnvoll ist, beispielsweise im Schritt 306 lediglich die erste Teilabfrage in Verbindung mit der dritten Teilabfrage durchzuführen oder die zweite Teilabfrage in Verbindung mit der dritten Teilabfrage durchzuführen. Ist im Schritt 306 wenigstens eine der Teilabfragen erfüllt, d.h., liegt eine Kipptendenz des Fahrzeuges vor, so wird im Anschluß an den Schritt 306 ein Schritt 307 ausgeführt. Die bei Vorliegen einer Kipptendenz im Block 206 stattfindende Ausgabe der Größe KT ist in Figur 3 nicht dargestellt. Ist dagegen im Schritt 306 keine der Teilabfragen erfüllt, d.h., liegt keine Kipptendenz des Fahrzeuges vor, so wird im Anschluß an den Schritt 306 erneut der Schritt 301 ausgeführt.

Im Schritt 307 werden wie im Zusammenhang mit den Figuren 2a, 2b sowie 2c bereits angedeutet, entsprechende Bremseneingriffe und/oder Motoreingriffe und/oder Fahrwerkseingriffe durchgeführt, um ein Kippen des Fahrzeuges um eine in Längsrichtung des Fahrzeuges orientierte Fahrzeugachse zu vermeiden. An dieser Stelle sei bemerkt, daß die im Schritt 307 dargestellten Eingriffe, ausgehend vom Fahrzeugregler in Verbindung mit der Ansteuerlogik dann ausgeführt werden, wenn dem Fahrzeugregler durch die Größen KT bzw. KTa bzw. KTz mitgeteilt wird, daß eine Kipptendenz des Fahrzeuges um eine in Längsrichtung des Fahrzeuges orientierte Fahrzeugachse vorliegt.

Wird im Schritt 303 festgestellt, daß der Betrag der Größe lambdaixj größer als der entsprechende Schwellenwert S2 ist, so kann die erste Art der Erkennung nicht angewandt werden, da aufgrund der zu großen Schlupfwerte und der dadurch entstehenden Fehler bei der Ermittlung der das Radverhalten quantitativ beschreibenden Größen rixj im Schritt 306 Fehlentscheidungen entstehen würden. Deshalb wird, wenn der Betrag der Größe lambdaixj größer als der Schwellenwert S2 ist, im Anschluß an den Schritt 303 ein Schritt 308 ausgeführt, mit dem eine zweite Art von Erkennung, ob eine Kipptendenz des Fahrzeuges vorliegt, eingeleitet wird. Diese zweite Art der Erkennung wird in Abhängigkeit von der für wenigstens ein Rad in einem vorigen Zeitschritt ermittelten Größe, die das Radverhalten quantitativ beschreibt, durchgeführt. Im Schritt 308 wird eine die Schwerpunktshöhe des Fahrzeuges beschreibende Größe hsix, die insbesondere eine achsbezogene Schwerpunktshöhe darstellt, bereitgestellt. Hierzu wird beispielsweise die Größe hsix, die für einen vorigen Zeitschritt, bei dem die im Schritt 303 stattfindende Abfrage erfüllt war, und die zwischengespeichert war, eingelesen. Alternativ kann die Größe hsix in Abhängigkeit der Größen rixj, die für einen vorigen Zeitschritt, bei dem die im Schritt 303 stattfindende Abfrage erfüllt war, und die zwischengespeichert waren, ermittelt werden. Die achsbezogene Schwerpunktshöhe hsix wird allgemein gemäß der Gleichung

$$hsix = \frac{C \cdot a^2}{mlix \cdot aq} \cdot alphaix$$

ermittelt. In vorstehender Gleichung repräsentiert die Größe C die resultierende vertikale Steifigkeit der der Radachse zugeordneten Räder, die Größe a entspricht der halben Spurweite der Radachse, die Größe alphaix entspricht dem Neigungswinkel der Radachse gegenüber der Fahrbahn, die Größe mlix entspricht der auf die Radachse wirkenden Last und die Größe aq entspricht der auf das Fahrzeug wirkenden Querbeschleunigung. Dabei werden die Größen mlix, aq sowie alphaix beispielsweise des Zeitschrittes verwendet, zu dem die im Schritt 303 stattfindende Abfrage noch erfüllt war. Dies bedeutet in diesem Fall, daß die Größe mlix, die Größe aq sowie die Größe alphaix oder die für die Ermittlung der Größe alphaix erforderlichen Größen rixj laufend in einem Zwischenspeicher abgelegt werden müssen. Im Anschluß an den Schritt 308 wird ein Schritt 309 ausgeführt.

Im Schritt 309 wird in bekannter Weise, ausgehend von der die Schwerpunktshöhe des Fahrzeuges beschreibenden Größe hsix ein Geschwindigkeitsgrenzwert für die Kurvenfahrt des Fahrzeuges ermittelt. Der Geschwindigkeitsgrenzwert gibt die Geschwindigkeit für das Fahrzeug an, bei dem ein Kippen des Fahrzeuges um eine in Längsrichtung des Fahrzeuges orientierte Fahrzeugachse nicht zu erwarten ist. Zur Ermittlung des Geschwindigkeitsgrenzwertes in Abhängigkeit der die Schwerpunktshöhe des Fahrzeuges beschreibenden Größe sei beispielsweise auf die im "Kraftfahrtechnischen Taschenbuch", VDI-Verlag, 21. Auflage, auf Seite 346 stehende Formel verwiesen. Im Anschluß an den Schritt 309 wird ein Schritt 310 ausgeführt. Im Schritt 310 wird festgestellt, ob der Betrag der Differenz, die aus der Fahrzeuggeschwindigkeit und dem Geschwindigkeitsgrenzwert gebildet wird, kleiner gleich einem Schwellenwert S4 ist. Ist der Betrag der Differenz kleiner gleich dem Schwellenwert S4, so liegt eine Kipptendenz des Fahrzeuges um eine in Längsrichtung des Fahrzeuges orientierte Fahrzeugachse vor, und im Anschluß an den Schritt 310 wird der Schritt 307 ausgeführt. Ist dagegen der Betrag der Differenz größer als der Schwellenwert s4, was gleichbedeutend damit ist, daß eine Kipptendenz des Fahrzeuges nicht vorliegt, so wird anschließend an den Schritt 310 der Schritt 301 ausgeführt.

Dadurch daß in der Figur 3 lediglich auf ein einteiliges Fahrzeug eingegangen wird, soll keine Einschränkung der erfindungswesentlichen Idee entstehen. Das in Figur 3 dargestellte Ablaufdiagramm ist in entsprechender Weise auch für eine Fahrzeugkombination anwendbar.

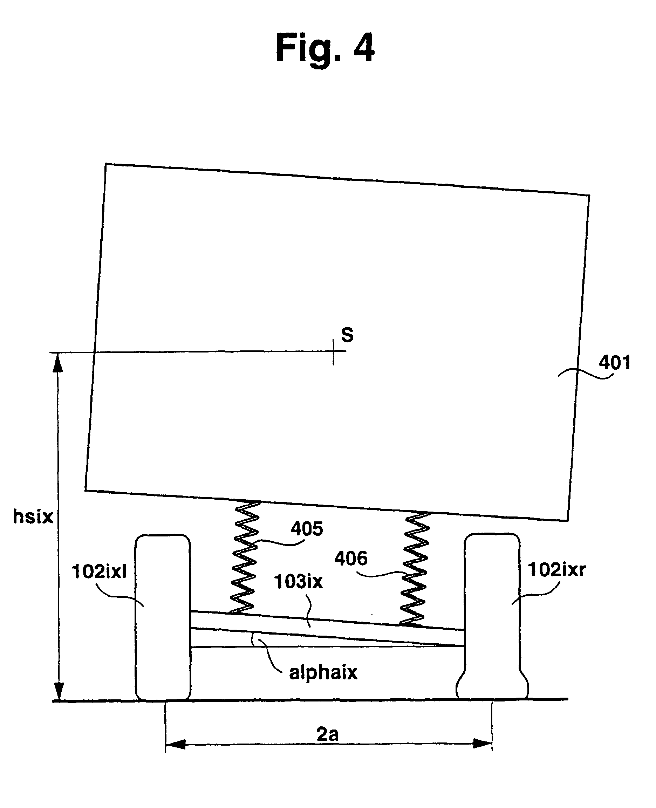

Mit Hilfe von Figur 4 soll abschließend der dem erfindungsgemäßen Verfahren zugrundeliegende physikalische Sachverhalt dargestellt werden. In Figur 4 ist ein einteiliges Fahrzeug, wie es in Figur 1a dargestellt ist, schematisch dargestellt. Dies soll jedoch keine Einschränkung darstellen.

In Figur 4 ist eine Radachse 103ix mit den zugehörigen Rädern 102ixl bzw. 102ixr dargestellt. Ferner ist der mittels Aufhängungsvorrichtungen 405 bzw. 406 mit der Radachse 103ix verbundene Fahrzeugaufbau 401 dargestellt. In Figur 4 ist die Spurweite 2a des Fahrzeuges eingezeichnet. Ferner ist der achsbezogene Schwerpunkt S und die zugehörige achsbezogene Schwerpunktshöhe hsix eingezeichnet. Ebenso ist der Neigungswinkel alphaix der Radachse gegenüber dem Fahrbahnuntergrund eingezeichnet. Für das Fahrzeug liegt eine Kurvenfahrt nach links vor.

Wie Figur 4 zeigt, entstehen bei einer Kurvenfahrt Lastverlagerungen, das kurveninnere Rad 102ixl wird entlastet und kann in Extremsituationen den Bodenkontakt verlieren. Dabei ist es unerheblich, ob die Kurvenfahrt auf einer ebenen oder auf einer geneigten Fahrbahn stattfindet. Das kurvenäußere Rad 102ixr wird stärker belastet. Durch diese Lastverlagerung an den einzelnen Rädern ändert sich der jeweilige dynamische Rollradius rixj. Diese Änderungen lassen sich folglich zur Erkennung eines abhebenden Rades verwenden, was wiederum zur Erkennung der Kipptendenz des Fahrzeuges um eine in Längsrichtung des Fahrzeuges orientierte Fahrzeugachse verwendet werden kann.

Abschließend sei bemerkt, daß die in der Beschreibung gewählte Form des Ausführungsbeispiels sowie die in den Figuren gewählte Darstellung keine einschränkende Wirkung auf die erfindungswesentliche Idee darstellen soll.

**Patentansprüche**

1. Verfahren zur Erkennung einer Kipptendenz eines Fahrzeuges um eine in Längsrichtung des Fahrzeuges orientierte Fahrzeugachse,
   bei dem für wenigstens ein Rad eine die Raddrehzahl beschreibende Größe ermittelt wird,
   bei dem wenigstens eine die Querdynamik des Fahrzeuges repräsentierende Größe ermittelt wird,
   **dadurch gekennzeichnet daß** für wenigstens ein Rad, wenigstens in Abhängigkeit der die Raddrehzahl des entsprechenden Rades beschreibenden Größe und einer der die Querdynamik des Fahrzeuges repräsentierenden Größen, eine das Radverhalten quantitativ beschreibende Größe ermittelt wird,
   wobei wenigstens in Abhängigkeit der für wenigstens ein Rad ermittelten Größe, die das Radverhalten dieses Rades quantitativ beschreibt, ermittelt wird, ob für das Fahrzeug eine Kipptendenz um eine in Längsrichtung des Fahrzeuges orientierte Fahrzeugachse vorliegt.

2. Verfahren nach Anspruch 1, **dadurch gekennzeichnet,**
   **daß** das Verfahren zur Erkennung einer Kipptendenz des Fahrzeuges um eine in Längsrichtung des Fahrzeuges orientierte Fahrzeugachse, im Rahmen eines Verfahrens zur Stabilisierung des Fahrzeuges, insbesondere im Rahmen eines Verfahrens zur Umkippvermeidung des Fahrzeuges, eingesetzt wird, und
   **daß** bei Vorliegen einer Kipptendenz des Fahrzeuges um eine in Längsrichtung des Fahrzeuges orientierte Fahrzeugachse, zur Stabilisierung des Fahrzeuges, insbesondere zur Vermeidung des Umkippens des Fahrzeuges, wenigstens Bremseneingriffe an wenigstens einem Rad und/oder Motoreingriffe und/oder Eingriffe an Fahrwerksaktuatoren durchgeführt werden.

3. Verfahren nach Anspruch 1, **dadurch gekennzeichnet,**
   **daß** der Betrag einer der die Querdynamik des Fahrzeuges repräsentierende Größen, insbesondere der einer die Querbeschleunigung und/oder der einer die Gierrate des Fahrzeuges beschreibende Größe, mit einem Schwellenwert verglichen wird, und
   **daß** die Erkennung, ob eine Kipptendenz des Fahrzeuges um eine in Längsrichtung des Fahrzeuges orientierte Fahrzeugachse vorliegt, dann ausgeführt wird, wenn der Betrag der einen die Querdynamik des Fahrzeuges repräsentierenden Größe größer als der Schwellenwert ist.

4.  Verfahren nach Anspruch 1, **dadurch gekennzeichnet,**
    **daß** für wenigstens ein Rad der an diesem Rad vorherrschende Antriebs- und/oder Bremsschlupf ermittelt wird und der Betrag dieses Antriebs- und/oder Bremsschlupfes mit einem entsprechenden Schwellenwert verglichen wird, und
    **daß** die Erkennung, ob eine Kipptendenz des Fahrzeuges um eine in Längsrichtung des Fahrzeuges orientierte Fahrzeugachse vorliegt, in Abhängigkeit dieses Vergleiches durchgeführt wird,
    insbesondere wird, wenn für das wenigstens eine Rad der Betrag des an diesem Rad vorherrschenden Antriebs- und/oder Bremsschlupfes kleiner als der entsprechende Schwellenwert ist, die Erkennung, ob eine Kipptendenz des Fahrzeuges um eine in Längsrichtung des Fahrzeuges orientierte Fahrzeugachse vorliegt, wenigstens in Abhängigkeit von der für das wenigstens eine Rad im aktuellen Zeitschritt ermittelten Größe, die das Radverhalten quantitativ beschreibt, durchgeführt, und/oder
    wird, wenn für das wenigstens eine Rad der Betrag des an diesem Rad vorherrschende Antriebs- und/oder Bremsschlupfes größer als der entsprechende Schwellenwert ist, die Erkennung, ob eine Kipptendenz des Fahrzeuges um eine in Längsrichtung des Fahrzeuges orientierte Fahrzeugachse vorliegt, wenigstens in Abhängigkeit von der für das wenigstens eine Rad in einem vorigen Zeitschritt ermittelten Größe, die das Radverhalten quantitativ beschreibt, durchgeführt.

5.  Verfahren nach Anspruch 1, **dadurch gekennzeichnet,**
    **daß** als die das Radverhalten des jeweiligen Rades quantitativ beschreibende Größe eine von der auf das jeweilige Rad wirkenden Radlast abhängige Größe, insbesondere eine den Durchmesser oder den Radius des jeweiligen Rades beschreibende Größe, ermittelt wird.

6.  Verfahren nach Anspruch 1, **dadurch gekennzeichnet,**
    **daß** die das Radverhalten des Rades quantitativ beschreibende Größe wenigstens in Abhängigkeit der die Raddrehzahl des entsprechenden Rades beschreibenden Größe, einer die Fahrzeuggeschwindigkeit beschreibenden Größe, einer der die Querdynamik des Fahrzeugs repräsentierenden Größen und einer die Geometrie des Fahrzeuges beschreibenden Größe ermittelt wird,
    insbesondere wird hierfür als die die Querdynamik des Fahrzeuges repräsentierende Größe eine die Gierrate des Fahrzeuges und/oder eine die Querbeschleunigung des Fahrzeuges beschreibende Größe ermittelt, und
die die Fahrzeuggeschwindigkeit beschreibende Größe wenigstens in Abhängigkeit von den für die Räder ermittelten Größen, die die Raddrehzahlen beschreiben, ermittelt.

7.  Verfahren nach Anspruch 1, **dadurch gekennzeichnet,**
    **daß** für das Fahrzeug eine Kipptendenz um eine in Längsrichtung des Fahrzeuges orientierte Fahrzeugachse dann vorliegt,

    -   wenn für wenigstens ein Rad der Wert der Größe, die das Radverhalten quantitativ beschreibt, größer als ein erster Schwellenwert ist, oder
        wenn für wenigstens ein Rad der Wert der Größe, die das Radverhalten quantitativ beschreibt, kleiner als ein zweiter Schwellenwert ist, und/oder
    -   wenn für wenigstens ein Rad der Betrag einer Differenz, die aus dem Wert der Größe, die das Radverhalten quantitativ beschreibt, und einem Vergleichswert gebildet wird, größer als ein entsprechender Schwellenwert ist, und/oder
    -   wenn für wenigstens ein Rad der Betrag einer Größe, die den zeitlichen Verlauf der das Radverhalten quantitativ beschreibenden Größe beschreibt, kleiner als ein entsprechender Schwellenwert ist, und/oder
    -   wenn der Betrag einer den Neigungswinkel einer Radachse beschreibenden Größe größer als ein entsprechender Schwellenwert ist,

    wobei für die Räder der entsprechenden Radachse jeweils die das Radverhalten quantitativ beschreibenden Größen ermittelt werden, und in Abhängigkeit dieser Größen die den Neigungswinkel der Radachse beschreibende Größe ermittelt wird.

8.  Verfahren nach Anspruch 1, **dadurch gekennzeichnet,**
    **daß** für das Fahrzeug eine Kipptendenz um eine in Längsrichtung des Fahrzeuges orientierte Fahrzeugachse dann vorliegt, wenn der Betrag der Differenz, die aus einer die Fahrzeuggeschwindigkeit beschreibenden Größe und einem Geschwindigkeitsgrenzwert gebildet wird, kleiner als ein entsprechender Schwellenwert ist,
    insbesondere wird hierzu der Geschwindigkeitsgrenzwert wenigstens in Abhängigkeit einer die Schwerpunktshöhe des Fahrzeuges beschreibenden Größe ermittelt, wobei diese die Schwerpunktshöhe des Fahrzeuges beschreibende Größe wenigstens in Abhängigkeit der für wenigstens ein Rad ermittelten Größe, die das Radverhalten quantitativ beschreibt, ermittelt wird.

**9.** Vorrichtung zur Erkennung einer Kipptendenz eines Fahrzeuges um eine in Längsrichtung des Fahrzeuges orientierte Fahrzeugsachse,
die erste Mittel enthält, mit denen für wenigstens ein Rad eine die Raddrehzahl beschreibende Größe ermittelt wird,
die zweite Mittel enthält, mit denen wenigstens eine die Querdynamik des Fahrzeuges repräsentierende Größe ermittelt wird, **dadurch gekennzeichnet daß** die Vorrichtung weiterhin dritte Mittel enthält, mit denen für wenigstens ein Rad, wenigstens in Abhängigkeit der mit den ersten Mitteln für das entsprechende Rad ermittelten Größe und einer der mit den zweiten Mitteln ermittelten, die Querdynamik des Fahrzeuges repräsentierenden Größen, eine das Radverhalten quantitativ beschreibende Größe ermittelt wird, und
vierte Mittel enthält, mit denen wenigstens in Abhängigkeit von der mit den dritten Mitteln für wenigstens ein Rad ermittelten Größe ermittelt wird, ob für das Fahrzeug eine Kipptendenz um eine in Längsrichtung des Fahrzeuges orientierte Fahrzeugachse vorliegt.

**10.** Vorrichtung nach Anspruch 9, **dadurch gekennzeichnet,**
**daß** die Vorrichtung zur Erkennung einer Kipptendenz des Fahrzeuges um eine in Längsrichtung des Fahrzeuges orientierte Fahrzeugachse, in einer Vorrichtung zur Stabilisierung des Fahrzeuges, insbesondere in einer Vorrichtung zur Umkippvermeidung des Fahrzeuges, eingesetzt wird, und
**daß** bei Vorliegen einer Kipptendenz des Fahrzeuges um eine in Längsrichtung des Fahrzeuges orientierte Fahrzeugachse, zur Stabilisierung des Fahrzeuges, insbesondere zur Vermeidung des Umkippens des Fahrzeuges, wenigstens an wenigstens einem Rad die diesem Rad zugeordneten Aktuatoren zur Erzeugung einer Bremskraft und/oder ein Mittel zur Beeinflussung des Motormoments und/oder Fahrwerkaktuatoren betätigt werden.

**Claims**

**1.** Device for detecting a tendency of a vehicle to tilt about a vehicle axis oriented in the longitudinal direction of the vehicle,
in which a variable describing the wheel speed is determined for at least one wheel,
in which at least one variable representing the transverse dynamics of the vehicle is determined, **characterized in that**, for at least one wheel, a variable describing the wheel behaviour quantitatively is determined at least as a function of the variable describing the wheel speed of the corresponding wheel and one of the variables representing the transverse dynamics of the vehicle,

it being determined, at least as a function of the variable which is determined for at least one wheel and which describes the wheel behaviour of this wheel quantitatively, whether there is a tendency for the vehicle to tilt about a vehicle axis oriented in the longitudinal direction of the vehicle.

**2.** Method according to Claim 1, **characterized in that** the method for detecting a tendency of the vehicle to tilt about a vehicle axis oriented in the longitudinal direction of the vehicle is used within the scope of a method for stabilizing the vehicle, in particular within the scope of the method for preventing the vehicle from tipping over, and **in that**, when there is tendency of the vehicle to tilt about a vehicle axis oriented in the longitudinal direction of the vehicle, at least braking interventions are carried out at at least one wheel and/or engine interventions and/or interventions in chassis actuators, in order to stabilize the vehicle, in particular in order to prevent the vehicle from tipping over.

**3.** Method according to Claim 1, **characterized in that** the absolute value of one of the variables representing the transverse dynamics of the vehicle, in particular that of a variable describing the transverse acceleration, and/or that of a variable describing the yaw rate, of the vehicle, is compared with a threshold value, and
**in that** the detection as to whether there is a tendency of the vehicle to tilt about a vehicle axis oriented in the longitudinal direction of the vehicle is carried out if the absolute value of the variable representing the transverse dynamics of the vehicle is greater than the threshold value.

**4.** Method according to Claim 1, **characterized in that**, for at least one wheel, the drive slip and/or brake slip present at this wheel is determined and the absolute value of this drive slip and/or brake slip is compared with a corresponding threshold value, and
**in that** the detection as to whether there is a tendency of the vehicle to tilt about a vehicle axis oriented in the longitudinal direction of the vehicle is carried out as a function of this comparison,
in particular if, for the at least one wheel, the absolute value of the drive slip and/or brake slip present at this wheel is smaller than the corresponding threshold value, the detection as to whether there is a tendency of the vehicle to tilt about a vehicle axis oriented in the longitudinal direction of the vehicle is carried out at least as a function of the variable which is determined for the at least one wheel in the current time step and which describes the wheel behaviour quantitatively, and/or
if, for the at least one wheel, the absolute value of the drive slip and/or brake slip present at this wheel is greater than the corresponding threshold value, the detection as to whether there is a tendency of the vehicle to tilt about a vehicle axis oriented in the longitudinal direction of the vehicle is carried out at least as a function of the variable which is determined for the at least one wheel in a preceding time step and which describes the wheel behaviour quantitatively.

5. Method according to Claim 1, **characterized in that** a variable which is dependent on the wheel load acting on the respective wheel, in particular a variable describing the diameter or the radius of the respective wheel, is determined as the variable describing the wheel behaviour of the respective wheel quantitatively.

6. Method according to Claim 1, **characterized in that** the variable describing the wheel behaviour of the wheel quantitatively is determined at least as a function of the variable describing the wheel speed of the corresponding wheel, a variable describing the velocity of the vehicle, one of the variables representing the transverse dynamics of the vehicle and a variable describing the geometry of the vehicle,
   in particular a variable describing the yaw rate of the vehicle and/or a variable describing the transverse acceleration of the vehicle, is determined for this purpose as the variable representing the transverse dynamics of the vehicle, and
   the variable describing the velocity of the vehicle is determined at least as a function of the variables which are determined for the wheels and which describe the wheel speeds.

7. Method according to Claim 1, **characterized in that** there is a tendency for the vehicle to tilt about a vehicle axis oriented in the longitudinal direction of the vehicle

   - if, for at least one wheel, the value of the variable which describes the wheel behaviour quantitatively is greater than a first threshold value, or
   - if, for at least one wheel, the value of the variable which describes the wheel behaviour quantitatively is smaller than a second threshold value, and/or
   - if, for at least one wheel, the absolute value of a difference which is formed from the value of the variable which describes the wheel behaviour quantitatively, and a comparison value, is greater than a corresponding threshold value, and/or
   - if, for at least one wheel, the absolute value of a variable which describes the time profile of the variable describing the wheel behaviour quantitatively is smaller than a corresponding threshold value, and/or
   - if the absolute value of a variable describing the angle of inclination of a wheel axis is greater than a corresponding threshold value,

in which case, for the wheels of the corresponding wheel axis, in each case the variables describing the wheel behaviour quantitatively are determined and the variable describing the angle of inclination of the wheel axis is determined as a function of these variables.

8. Method according to Claim 1, **characterized in that** there is a tendency for the vehicle to tilt about the vehicle axis oriented in the longitudinal axis of the vehicle if the absolute value of the difference which is formed from a variable describing the velocity of the vehicle and a velocity limiting value is smaller than a corresponding threshold value,
   in particular, for this purpose, the velocity limiting value is determined at least as a function of a variable describing the height of the centre of the gravity of the vehicle, this variable describing the height of the centre of gravity of the vehicle being determined at least as a function of the variable which is determined for at least one wheel and which describes the wheel behaviour quantitatively.

9. Device for detecting a tendency of a vehicle to tilt about a vehicle axis oriented in the longitudinal direction of the vehicle, which contains first means with which, for at least one wheel, a variable describing the wheel speed is determined,
   which contains second means with which at least a variable representing the transverse dynamics of the vehicle is determined, **characterized in that** the device also contains third means with which, for at least one wheel, a variable describing the wheel behaviour quantitatively is determined at least as a function of the variable which is determined for the corresponding wheel using the first means, and one of the variables which is determined using the second means and represents the transverse dynamics of the vehicle, and
   contains fourth means with which it is determined, at least as a function of the variable which is determined for at least one wheel using the third means, whether there is a tendency for the vehicle to tilt about a vehicle axis oriented in the longitudinal direction of the vehicle.

10. Device according to Claim 9, **characterized in that** the device for detecting a tendency of the vehicle to tilt about a vehicle axis oriented in the longitudinal direction of the vehicle is used in a device for stabilizing the vehicle, in particular in a device for preventing the vehicle from tipping over, and **in that**, in order to stabilize the vehicle, in particular to prevent the vehicle from tipping over when there is a tendency of the vehicle to tilt about a vehicle axis oriented in the longitudinal direction of the vehicle, at least at one wheel the actuators assigned to this wheel are at least activated in order to generate a braking force and/or a means for influencing the engine torque and/or chassis actuators are activated.

**Revendications**

1. Procédé pour détecter une tendance au basculement d'un véhicule autour d'un axe du véhicule orienté dans le sens longitudinal du véhicule, selon lequel, pour au moins une roue, on détermine une grandeur décrivant la vitesse de la roue, et on détermine au moins une grandeur représentant la dynamique transversale du véhicule,
**caractérisé en ce que**
pour au moins une roue, on détermine une grandeur décrivant quantitativement le comportement de la roue au moins en fonction de la grandeur décrivant la vitesse de la roue correspondante et de l'une des grandeurs représentant la dynamique transversale du véhicule, en déterminant au moins en fonction de la grandeur déterminée pour au moins une roue et qui décrit quantitativement le comportement de cette roue, s'il existe pour le véhicule une tendance au basculement autour d'un axe du véhicule orienté dans le sens longitudinal du véhicule.

2. Procédé selon la revendication 1,
**caractérisé en ce que**
le procédé pour détecter une tendance au basculement d'un véhicule autour d'un axe du véhicule orienté dans le sens longitudinal du véhicule est mis en oeuvre dans le cadre d'un procédé pour stabiliser le véhicule, en particulier dans le cadre d'un procédé pour éviter le retournement du véhicule, et dans le cas où il existe une tendance au basculement du véhicule autour d'un axe du véhicule orienté dans le sens longitudinal du véhicule, pour stabiliser le véhicule, en particulier pour éviter le retournement du véhicule, on exécute au moins des actions de freinage sur au moins une roue et/ou des actions sur le moteur et/ou des actions sur les actionneurs du châssis.

3. Procédé selon la revendication 1,
**caractérisé en ce que**
le montant d'une des grandeurs représentant la dynamique transversale du véhicule, en particulier celle décrivant l'accélération transversale et/ou celle décrivant l'angle de lacet du véhicule, est comparé à une valeur seuil, et
la reconnaissance d'une tendance au basculement du véhicule autour d'un axe du véhicule orienté dans le sens longitudinal du véhicule, est effectuée ensuite si le montant de cette grandeur représentant la dynamique transversale du véhicule est supérieur à la valeur seuil.

4. Procédé selon la revendication 1,
**caractérisé en ce que**
pour au moins une roue, on détermine le patinage et/ou le blocage prédominant sur cette roue et le montant de ce patinage et/ou blocage est comparé à une valeur seuil correspondante, et
en fonction de cette comparaison on effectue la reconnaissance d'une tendance au basculement d'un véhicule autour d'un axe du véhicule orienté dans le sens longitudinal du véhicule,
en particulier, quand, pour au moins une roue, le montant du patinage et/ou blocage prédominant sur cette roue est inférieur à la valeur seuil correspondante, au moins en fonction de la grandeur déterminée pour au moins une roue au pas de temps actuel et qui décrit quantitativement le comportement de la roue on effectue la reconnaissance d'une tendance au basculement d'un véhicule autour d'un axe du véhicule orienté dans le sens longitudinal du véhicule, et/ou
quand pour au moins une roue, le montant du patinage et/ou blocage prédominant sur cette roue est supérieur à la valeur seuil correspondante, on effectue au moins en fonction de la grandeur déterminée pour au moins une roue au pas de temps précédent et qui décrit quantitativement le comportement de la roue, la reconnaissance d'une tendance au basculement d'un véhicule autour d'un axe du véhicule orienté dans le sens longitudinal du véhicule.

5. Procédé selon la revendication 1,
**caractérisé en ce que**
comme grandeur décrivant quantitativement le comportement de la roue considérée, on détermine une grandeur dépendante de la charge de roue agissant sur la roue considérée, en particulier, une grandeur décrivant le diamètre ou le rayon de la roue considérée.

6. Procédé selon la revendication 1,
**caractérisé en ce qu'**
on détermine la grandeur décrivant quantitativement le comportement de la roue au moins en fonction de la grandeur décrivant la vitesse de la roue correspondante, d'une grandeur décrivant la vitesse du véhicule, de l'une des grandeurs représentant la dynamique transversale du véhicule et d'une grandeur décrivant la géométrie du véhicule,
en particulier, comme grandeur représentant la dynamique transversale du véhicule on détermine à cet effet une grandeur décrivant l'angle de lacet du véhicule et/ou l'accélération transversale du véhi-

**15**

cule, et

la grandeur décrivant la vitesse du véhicule est déterminée au moins en fonction des grandeurs déterminées pour les roues, décrivant les vitesses des roues.

7. Procédé selon la revendication 1,
**caractérisé en ce que**
pour le véhicule, une tendance au basculement autour d'un axe du véhicule orienté dans le sens longitudinal du véhicule existe alors,

- quand pour au moins une roue, la valeur de la grandeur décrivant quantitativement le comportement de la roue est supérieure à une première valeur seuil, ou
- quand pour au moins une roue, la valeur de la grandeur décrivant quantitativement le comportement de la roue est inférieure à une deuxième valeur seuil et/ou
- quand pour au moins une roue, le montant d'une différence, qui est calculée à partir de la valeur de la grandeur décrivant quantitativement le comportement de la roue, et d'une valeur de comparaison, est supérieur à une valeur seuil déterminée, et/ou
- quand, pour au moins une roue, le montant d'une grandeur qui décrit le comportement dans le temps de la grandeur décrivant quantitativement le comportement de la roue, est inférieur à une valeur seuil correspondante, et/ou,
- quand le montant d'une grandeur décrivant l'angle d'inclinaison d'un essieu est supérieur à une valeur seuil correspondante,

en déterminant pour les roues de l'essieu correspondant, toutes les grandeurs décrivant quantitativement le comportement de la roue, et en déterminant la grandeur décrivant l'angle d'inclinaison de l'essieu en fonction de ces grandeurs.

8. Procédé selon la revendication 1,
**caractérisé en ce que**
pour le véhicule, une tendance au basculement autour d'un axe du véhicule orienté dans le sens longitudinal du véhicule existe alors,
quand le montant de la différence, qui est calculé à partir d'une grandeur décrivant la vitesse du véhicule et une valeur limite de vitesse, est inférieur à une valeur seuil correspondante,
en particulier, on détermine à cet effet la valeur limite de la vitesse au moins en fonction d'une grandeur décrivant la hauteur du centre de gravité du véhicule, cette grandeur décrivant la hauteur du centre de gravité du véhicule étant déterminée au moins en fonction de la grandeur déterminée pour au moins une roue et qui décrit quantitativement le comportement de la roue.

9. Dispositif pour détecter une tendance au basculement d'un véhicule autour d'un axe du véhicule orienté dans le sens longitudinal du véhicule, comprenant
un premier moyen, avec lequel on détermine, pour au moins une roue, une grandeur décrivant la vitesse de la roue, et
un second moyen, avec lequel on détermine au moins une grandeur représentant la dynamique transversale du véhicule,
**caractérisé en ce que**
le dispositif comprend en outre un troisième moyen, avec lequel, pour au moins une roue, on détermine une grandeur décrivant quantitativement le comportement de la roue au moins en fonction de la grandeur déterminée avec le premier moyen pour la roue correspondante et d'une des grandeurs déterminées avec le second moyen représentant la dynamique transversale du véhicule, et comprend un quatrième moyen, avec lequel on détermine si, pour ce véhicule, une tendance au basculement autour d'un axe du véhicule orienté dans le sens longitudinal du véhicule existe, au moins en fonction de la grandeur déterminée avec le troisième moyen pour au moins une roue.

10. Dispositif selon la revendication 9,
**caractérisé en ce que**
le dispositif pour détecter une tendance au basculement du véhicule autour d'un axe du véhicule orienté dans le sens longitudinal du véhicule est mis en oeuvre dans un dispositif pour stabiliser le véhicule, en particulier dans un dispositif pour éviter le retournement du véhicule, et
en présence d'une tendance au basculement du véhicule autour d'un axe du véhicule orienté dans le sens longitudinal du véhicule, pour stabiliser le véhicule, en particulier pour éviter le retournement du véhicule, on commande, sur au moins une roue, les actionneurs associés à cette roue pour créer une force de freinage, et/ou un moyen pour influencer le couple moteur et/ou les actionneurs du châssis.

# Fig. 1a

102v1r    102v2r    102h2r    102h1r

103v1  103v2    103h2  103h1

101

104

102v1l    102v2l    102h2l    102h1l

# Fig. 1b

107vrz    105    107hrz    106    107h2ra    107h1ra

108vz    108hz    108h2a  108h1a

109

107vlz    107hlz    107h2la    107h1la

# Fig. 1c

107vrz    105    107hrz    106    107h2ra    107h1ra

108vz    108hz    108h2a  108h1a

110    111

107vlz    107hlz    107h2la    107h1la

17

# Fig. 2a

EP 0 954 460 B1

# Fig. 2b

EP 0 954 460 B1

# Fig. 2c

EP 0 954 460 B1

# Fig. 3a

```
┌─────────────────────────┐
│ nixj, omega, aq, vf      │
│ lambdaixj,mlix           │──── 301
│ einlesen                 │
└─────────────────────────┘
              │
              ▼
         ╱─────────────╲
        ╱  |aq| > S1a    ╲
   N   ╱      u/o          ╲
◄─────╱   |omega| > S1b     ╲──── 302
  ╲   ╲         ?          ╱
   B   ╲─────────────────╱
              │ J
              ▼
         ╱───────────────╲                    N
        ╱  |lambdaixj| < S2 ╲ ─────────────────────┐
        ╲        ?          ╱                       │
   303   ╲─────────────────╱                        │
              │ J                                   ▼
              ▼                        ┌─────────────────────────┐
  304  ┌──────────────┐                │ hsix eines vorigen      │
       │ rixj ermitteln│               │ Zeitschrittes           │──── 308
       └──────────────┘                │ bereitstellen           │
              │                        └─────────────────────────┘
              ▼                                     │
  305 ┌──────────────────────┐                      ▼
      │ deltarixj,rixjpunkt,  │             ┌──────────────┐
      │ alphaix ermitteln     │             │ vg ermitteln │──── 309
      └──────────────────────┘             └──────────────┘
              │                                     │
              │                                     ▼
              │                              ╱───────────────╲      N
              │                             ╱  |vf - vg|≤ S4   ╲ ──────►( B )
              │                             ╲       ?          ╱
              │                              ╲───────────────╱──── 310
              ▼                                     │ J
            ( A )                                   ▼
                                                  ( C )
```

Fig.3b

(A)

(B)

N

$$\left(\begin{array}{l} \text{rixj} > \text{S3a} \\ \text{rixj} < \text{S3b} \end{array}\right)$$
und/oder
$|\text{deltarixj}| > \text{S3c}$
und/oder
$|\text{rixjpunkt}| < \text{S3d}$
und/oder
$|\text{alphaix}| > \text{S3e}$
?

306

J

(C)

Bremseneingriff
und/oder
Motoreingriff
und/oder
Fahrwerkseingriff

307

(B)

# Fig. 4